# EUROPÄISCHE PATENTSCHRIFT

(11) **EP 3 668 809 B1**
(45) Veröffentlichungstag und Bekanntmachung des Hinweises auf die Patenterteilung: **22.02.2023**
(21) Anmeldenummer: 18772710.2
(22) Anmeldetag: 14.08.2018
(51) Int. Cl.: B65H 23/025, B65H 23/34, B65H 27/00, B29C 53/18, D06C 3/06

(54) **SPREIZELEMENTERING FÜR EINE SPREIZWALZE SOWIE SPREIZWALZE**
SPREADING ELEMENT RING FOR A SPREADING ROLLER AND SPREADING ROLLER
BAGUE À ÉLÉMENTS D'ÉCARTEMENT POUR UN ROULEAU D'ÉCARTEMENT ET ROULEAU D'ÉCARTEMENT

(30) Priorität: 17.08.2017 DE 102017007807; 08.09.2017 DE 102017008468
(43) Veröffentlichungstag der Anmeldung: 24.06.2020
(73) Patentinhaber: Hessenbruch, Rolf, 42855 Remscheid (DE)
(72) Erfinder: Hessenbruch, Rolf, 42855 Remscheid (DE)
(86) Internationale Anmeldenummer: PCT/DE2018/000236
(87) Internationale Veröffentlichungsnummer: WO 2019/034191

(56) Entgegenhaltungen:
- DE-A1- 2 638 903
- DE-A1-102011 107 188
- DE-U1-202017 001 904
- GB-A- 2 071 625
- US-A- 4 194 275

## Beschreibung

Die Erfindung betrifft einen Spreizelementering aus elastisch verformbarem Material für eine Spreizwalze zum seitlichen Ausbreiten einer flächigen Materialbahn in axiale Spreizrichtungen mit einer Vielzahl an Spreizelementen, bei welchem die Vielzahl an Spreizelementen in Umfangsrichtung des Spreizelementerings hintereinander angeordnet sind.

Die Erfindung betrifft ebenfalls eine Spreizwalze (in der Praxis auch oft "Breitstreckwalze" genannt) zum seitlichen Ausbreiten einer flächigen Materialbahn in axiale Spreizrichtungen mit einer Vielzahl an einzelne Spreizelemente umfassende Spreizelementeringen, welche eine Umfangsfläche bilden, bei welcher zwischen einzelnen Spreizelementen an der Umfangsfläche ein Umfangsflächenspalt gebildet ist, welcher sich in Umfangsrichtung der Spreizwalze herum erstreckt.

Insbesondere gattungsgemäße Spreizwalzen bzw. Breitstreckwalzen sind aus dem Stand der Technik bekannt.

Es ist bekannt, eine "laufende" Warenbahn bzw. Materialbahn, zum Beispiel eine Papierbahn, eine Gewebebahn, eine Folienbahn usw., dadurch faltenfrei flachzulegen bzw. zu spreizen, dass senkrecht zur Laufrichtung der Warenbahn Spreizkräfte auf diese Warenbahn ausgeübt werden. Hierzu sind für Materialbahnen, wie Folien aus thermoplastischem Material, Papier, Vliese und andere Flachbahnen, sogenannte Streckwalzen bzw. Breitstreckwalzen bekannt.

Beispielsweise ist aus der DE 10 2011 107 188 A1 eine Spreizwalze bekannt, welche im Wesentlichen aus mehreren Spreizelementeringen besteht, die in Längserstreckung der Spreizwalze axial hintereinander angeordnet sind, wobei die Spreizelementeringe jeweils eine Vielzahl an Spreizelementen aufweisen, mittels welcher die eigentliche Umfangsfläche der Spreizwalze gebildet ist. Damit bei Berührung der Umfangfläche mit einer flächigen Warenbahn mittels der einzelnen Spreizelemente axial wirkende Spreizkräfte auf diese flächige Warenbahn ausgeübt werden können, müssen die einzelnen Spreizelemente, zumindest radial weiter Außen liegende Bereiche der Spreizelemente, in axialer Spreizrichtung, also in Richtung der Längserstreckung der Spreizwalze, eine entsprechende Bewegungsfreiheit haben. Diese Bewegungsfreiheit wird letztendlich dadurch gewährleistet, dass zwischen den einzelnen Spreizelementeringen jeweils ein Umfangsflächenspalt vorgesehen ist, in welchen hinein die Spreizelemente axial ausweichen können, sobald sie mit einer flächigen Warenbahn in Wirkkontakt treten. Durch eine derartige Bewegung der Spreizelemente in axialer Richtung kann der eigentliche Spreizvorgang an der flächigen Warenbahn bewerkstelligt werden.

Ferner offenbart die DE 20 2017 001 904 U1 noch eine Spreizwalze zum Ausbreiten einer flächigen Materialbahn mit einem Besatz aus Spreizelementeringen umfassend jeweils eine Vielzahl an Einzelspreizelementen, welche zumindest ein Kontaktteil und ein Stegteil aufweisen, wobei bei jedem Einzelspreizelement das Stegteil an der dem Kontaktteil abgewandten Seite weniger steif ausgestaltet ist als an der dem Kontaktteil zugewandten Seite. Insofern ist eine geringere Steifigkeit des Stegteils bzw. des Einzelspreizelements durch eine Sollbiegestelle örtlich genau festgelegt.

Außerdem ist aus der DE 26 38 903 A1 eine Gliederbreitstreckwalze für laufende Werkstoffbahnen mit einer geraden Welle und mit daran nebeneinander angeordneten Rollen, welche in gegenüber der Welle verschiedene Umlaufebenen verstellbar und in diesen Umlaufebenen durch die Welle antreibbar sind. Die Rollen zeichnen sich jeweils durch einen starren äußeren Ring aus, welcher über Achsstifte an einem inneren Ring festgelegt ist, wobei die äußeren Ringe der Rollen die Mantelfläche der Gliederbreitstreckwalze bilden.

Aus der US 4 194 275 A ist eine Spreizrolle für bahnbearbeitende Maschinen in der Papier-, Textil- und Plastikindustrie bekannt, wobei die Spreizrolle eine stationäre Welle aufweist, auf welcher eine Rollenstruktur rotierbar angeordnet ist. Die Rollenstruktur besitzt an ihrer äußeren Mantelfläche starre Zylindersegmente.

In der GB 2 071 625 A ist noch eine Vorrichtung zum Spreizen einer bewegten Materialbahn bzw. einer Gewebebahn gelehrt, wobei diese Vorrichtung eine gebogene Rolle mit einem gebogenen Schaft aufweist, auf welchem eine Anzahl von Spulen montiert ist, welche individuell rotierbar sind.

Es ist Aufgabe vorliegender Erfindung, gattungsgemäße Spreizwalzen bzw. Spreizelementeringe hierfür weiterzuentwickeln.

Die Aufgabe der Erfindung wird nach einem ersten Aspekt der Erfindung von einem Spreizelementering aus elastisch verformbarem Material für eine Spreizwalze zum seitlichen Ausbreiten einer flächigen Materialbahn mit einer Vielzahl an Spreizelementen gelöst, bei welchem die Vielzahl an Spreizelementen in Umfangsrichtung des Spreizelementerings hintereinander angeordnet sind, wobei Spreizelemente quer zur Umfangsrichtung und damit axial versetzt zueinander an dem Spreizelementering angeordnet sind.

Durch axial versetzt zueinander angeordnete Spreizelemente an einem Spreizelementering gelingt es baulich einfach, einen Umfangsflächenspalt mit einem quer zur Umfangsrichtung veränderlichen Axialhöhenverlauf zu erzeugen.

Insofern ist ein axialer Versatz einzelner in Umfangsrichtung verteilt angeordnete Spreizelemente vorteilhaft.

Der Begriff "Spreizelementering" umfasst im Sinne der Erfindung im Wesentlichen bevorzugt ein Tragringteil mit daran angeordneten unabhängig zueinander beweglichen, einzelnen Spreizelementen, welche nach radial weiter außen über die äußere Oberfläche des Tragringteil auskragen.

Ein Tragringteil kann etwa als offener Ring oder aber bevorzugt als geschlossener Ring realisiert sein.

Ein Spreizelementering besteht aus einem elastisch verformbaren Material, beispielsweise aus Gummi.

Vorzugsweise ist ein Stegteil bezogen auf eine Mittelachse eines Spreizelementerings um ca. 2° bis 4° in axialer Spreizrichtung geneigt angeordnet.

Der Begriff "Spreizelement" beschreibt vorliegend diejenigen Strukturen, welche die eigentliche Umfangsfläche bilden.

Ein Spreizelement umfasst zumindest ein radial außen angeordnetes Kontaktflächenteil, mittels welchem ein Spreizelementering mit einer flächigen Materialbahn wechselwirken kann, und ein radial weiter innen liegendes Stegteil, mittels welchem das Kontaktflächenteil beweglich mit dem Tragringteil wirkverbunden ist.

Bevorzugt ist der Spreizelementering insofern einstückig ausgestaltet, das heißt, das Tragringteil, Stegteile und Kontaktflächenteile bestehen aus einem gemeinsamen Grundkörper.

Insofern ist der vorliegende Spreizelementering in etwa c-förmig ausgebildet, so dass der Grundkörper eine c-förmige Gestalt besitzt.

Besonders vorteilhaft ist es, wenn ein Kontaktflächenteil eines Spreizelementerings an seinem freien Ende gerade ausgestaltet ist, um hierdurch ausreichend Abstand zu einem axial benachbarten Kontaktflächenteil eines anderen Spreizelementering zu haben und somit immer ein berührungsloses Arbeiten beim Spreizvorgang zu gewährleisten.

Hierdurch kann ein axialer Bewegungsfreiraum für eine axiale Beweglichkeit in axialer Spreizrichtung eines Spreizelements voll erhalten werden.

Der Begriff "gerade" beschreibt hierbei, dass das freie Ende des Kontaktflächenteils frei von Erhebungen, Vorsprüngen oder dergleichen ist, also vorzugsweise plan oder ausgebildet ist.

Mit dem Ausdruck "freies Ende" ist hierbei dasjenige Ende des Kontaktflächenteils beschrieben, welches einem Stegteil eines Spreizelements abgewandt ist.

Diese Spreizelemente sind im Wesentlichen konzentrisch um die Mittelachse bzw. Rotationsachse des Spreizelementerings herum angeordnet.

Der Begriff "axial" beschreibt im Sinne der Erfindung eine axiale Richtung, welche sich auf die Mittelachse bzw. Rotationsachse einer Spreizwalze bzw. eines Spreizelementerings bezieht.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Ferner sei noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Es soll noch ein Spreizelementering für eine Spreizwalze zum seitlichen Ausbreiten einer flächigen Materialbahn in axiale Spreizrichtungen mit einer Vielzahl an Spreizelementen erwähnt sein, bei welchem die Vielzahl an Spreizelementen in Umfangsrichtung des Spreizelementerings hintereinander angeordnet sind, wobei der Spreizelementering windschief ausgestaltet ist.

Mittels eines windschief ausgestalteten Spreizelementerings kann hinsichtlich zweier unmittelbar benachbarter Spreizelementeringe ein Umfangsflächenspalt mit einem quer zur Umfangsrichtung veränderlichen Axialhöhenverlauf gut an einer Spreizwalze realisiert werden.

Ferner können mittels des windschief ausgestalteten Spreizelementerings relativ einfach Mittel zum Vermeiden eines kritischen Eintauchens eines Materialbahnrandes radial in den Umfangsflächenspalt hinein geschaffen werden, da der windschief ausgestaltete Spreizelementering diese Vermeidungsmittel sogleich verkörpert.

Zudem kann die Montage zum schrägen Anordnen von Spreizelementeringen an einer Spreizwalze extrem vereinfacht werden.

Vorteilhafterweise weist der Spreizelementering einen auf seine Rotationsachse bezogenen windschief gestalteten Grundkörper auf, wodurch insbesondere Mittel zum Vermeiden eines kritischen Eintauchens eines Materialbahnrandes radial in den Umfangsflächenspalt hinein besonders einfach ausgestaltet sein können.

Darüber hinaus ist es zweckmäßig, wenn Spreizelemente in Umfangsrichtung mit einem Abstand voneinander beanstandet nebeneinander angeordnet sind, der mindestens die Breite eines Spreizelements in Umfangsrichtung beträgt, wobei dieser Abstand eine Lücke bedingt, in welcher ein Spreizelement, vorzugsweise zwei Spreizelemente, nur teilweise angeordnet sind.

Durch einen derartigen Abstand wird eine derartige Lücke geschaffen, so dass Spreizelemente von unmittelbar benachbart angeordneten Spreizelementeringen problemlos ineinander eingreifend bzw. verzahnt an einer Spreizwalze angeordnet werden können, so dass auch hierdurch ein Umfangsflächenspalt mit einem quer zur Umfangsrichtung veränderlichen Axialhöhenverlauf gewährleistet werden kann.

Es gibt auch Möglichkeiten, die Kontaktfläche jedes Einzelspreizelementes so zu gestalten, dass zumindest ein Teil der Kontaktfläche in den Bereich der axial benachbarten Kontaktfläche hineinragt und so für eine "Spaltüberbrückung" sorgt. Hierbei muss aber darauf geachtet werden, dass die Bewegungsmöglichkeit jedes Einzelspreizelementes erhalten bleibt.

Insofern ist es vorteilhaft, wenn die einzelnen Spreizelemente des Spreizelementerings derart zueinander angeordnet sind, dass die einzelnen Spreizelemente einen in Umfangsrichtung verlaufenden Umfangsflächenspalt ausgestalten.

Hierdurch kann ein gewünschter Umfangsflächenspalt bereits direkt durch einen einzelnen Spreizelementering erzeugt bzw. geschaffen werden, wodurch der entsprechende Umfangsflächenspalt auch präziser und zuverlässiger bereitgestellt gestellt werden kann.

In diesem Zusammenhang sei noch eine Spreizwalze zum seitlichen Ausbreiten einer flächigen Materialbahn in axiale Spreizrichtungen mit einer Umfangsfläche, mittels welcher die Spreizwalze mit der flächigen Materialbahn in Wirkkontakt gebracht wird, mit einer Rotationsachse, um welcher die Spreizwalze dreht, und mit einer Vielzahl an einzelne Spreizelemente umfassende Spreizelementeringen, welche die Umfangsfläche bilden, erwähnt, bei welcher zwischen einzelnen Spreizelementeringen an der Umfangsfläche ein Umfangsflächenspalt angeordnet ist, welcher sich jeweils zwischen zwei unmittelbar benachbarten Spreizelementeringen in Umfangsrichtung um die Spreizwalze herum erstrecken kann, wobei Mittel zum Vermeiden eines kritischen Eintauchens eines Materialbahnrandes radial in den Umfangsflächenspalt hinein vorgesehen sind.

Bei bisher aus dem Stand der Technik bekannten Spreizwalzen kann es je nach Dicke der flächigen Materialbahn und/oder je nach Transportgeschwindigkeit, mit welcher die flächige Materialbahn gegenüber der Spreizwalze bewegt wird, dazu kommen, dass Randbereiche der flächigen Materialbahn kurzzeitig in Umfangsflächenspalte eintauchen, da an einem solchen Umfangsflächenspalt keine Abstützfunktion gegenüber der flächigen Materialbahn besteht. Je nachdem, mit welcher Intensität dies geschieht, können hieraus zumindest visuelle Qualitätseinbußen an der flächigen Materialbahn resultieren, welche zwingend zu vermeiden sind. Oftmals entstehen hierbei auch Falten in der flächigen Materialbahn, was zu hohem Ausschuss führt.

Der Effekt des unerwünschten Eintauchens tritt insbesondere bei sehr dünnen Materialbahnen auf und kann dazu führen, dass der Materialbahnrand in den Umfangsflächenspalt regelrecht abknickt und unter widrigen Umständen sogar umschlägt, was nahezu immer zu erheblichen Qualitätseinbußen führt.

Vorliegend sind die Spreizwalze, Spreizelementeringe und/oder aber auch Spreizelemente hiervon jedoch dazu eingerichtet, ein derartiges unerwünschtes Eintauchen eines Materialbahnrandes in einen der Umfangsflächenspalte vorzugsweise zur Gänze zu unterbinden.

Insofern ist der Umfangsflächenspalt nicht mehr als auf einer geraden Linie senkrecht zur Rotationsachse umlaufender Ringspalt ausgeführt. Vielmehr erstreckt sich der Umfangsflächenspalt in Umfangsrichtung einer Spreizwalze bzw. eines Spreizelementerings entlang einer einfach gebogenen oder bevorzugt mehrfach gebogenen Linie.

Hierbei kann sich der jeweilige Umfangsflächenspalt durch sprunghafte Axialversätze auszeichnen, mittels welchen Richtungsänderungen an dem Umfangsflächenspalt einhergehen.

Somit umfassen die Spreizwalze bzw. deren Spreizelemente Vermeidungsmittel zum Vermeiden eines kritischen Eintauchens eines Materialbahnrandes radial in den Umfangsflächenspalt hinein, wodurch diesbezügliche negativen Nebeneffekte wirkungsvoll vermieden oder zumindest signifikant verringert werden.

Es versteht sich, dass derartige Vermeidungsmittel konstruktiv unterschiedlichst ausgebildet sein können.

Beispielsweise ist denkbar, zwischen den Spreizelementen einen Zwischenring einzubauen, mittels welchen die Gefahr eines unbeabsichtigten Eintauchens zumindest teilweise verhindert werden könnte, wobei ein derartiger Zwischenring jedoch die axiale Bewegungsfreiheit der einzelnen Spreizelemente einschränken würde.

Daher scheinen alternative Spreizelementekonstruktionen bzw. alternative Montagetechniken vielversprechender zu sein, wie später noch ausführlicher geschildert ist.

Es sollte jedenfalls darauf geachtet werden, dass der vorliegende Umfangsflächenspalt derart ausgestaltet ist, dass er eine axiale Beweglichkeit, also diejenige Beweglichkeit in axialer Spreizrichtung, eines Spreizelements nicht oder nur vernachlässigbar gering einschränkt.

Die Spreizwalze umfasst bevorzugt einen Rotationskörper, an welchem die Vielzahl an Spreizelementeringen montiert werden kann. Vorzugsweise werden die einzelnen Spreizelementeringe auf diesen Rotationskörper axial aufgeschoben.

Bei einer Spreizwalze im Sinne der vorliegenden Erfindung ist die Vielzahl an Spreizelementeringen in Richtung der Rotationsachse axial hintereinander angeordnet.

Die Spreizwalze weist in Richtung ihrer Rotationsachse eine Längserstreckung auf, wobei die Rotationsachse bzw. die Längserstreckung eine axiale Richtung an der Spreizwalze vorgeben. Die axiale Richtung ist gleichbedeutend mit der axialen Spreizrichtung, wobei die jeweilige axial wirkende Spreizrichtung letztendlich von der Montageausrichtung der Spreizelementeringe abhängig ist.

Ferner sei an dieser Stelle noch eine Spreizwalze zum seitlichen Ausbreiten einer flächigen Materialbahn in axiale Spreizrichtungen mit einer Umfangsfläche, mittels welcher die Spreizwalze mit der flächigen Materialbahn in Wirkkontakt gebracht wird, mit einer Rotationsachse, um welcher die Spreizwalze dreht, und mit einer Vielzahl an Spreizelementeringen, welche die Umfangsfläche bilden, erwähnt, bei welcher zwischen einzelnen Spreizelementeringen an der Umfangsfläche ein Umfangsflächenspalt angeordnet ist, welcher sich jeweils zwischen zwei unmittelbar benachbarten Spreizringelementen in Umfangsrichtung um die Spreizwalze herum erstrecken kann, wobei der Umfangsflächenspalt quer zur Umfangsrichtung einen veränderlichen Axialhöhenverlauf aufweist.

Hierbei ist zu beachten, dass der veränderliche Axialhöhenverlauf insbesondere auch bei einer Spreizwalze bzw. bei einem Spreizringelement vorhanden ist, welche bzw. welches unbelastet ist, also nicht mit einer flächigen Materialbahn in Wirkkontakt steht. Dies trifft auch auf weitere Merkmale des Umfangsflächenspalts zu.

Bereits durch einen Umfangsflächenspalt, der quer zur Umfangsrichtung einen veränderlichen Axialhöhenverlauf aufweist, kann wirkungsvoll vermieden werden, dass ein Materialbahnrand kritisch in einen der an der Spreizwalze vorhandenen Umfangsflächenspalte eintauchen kann.

Somit liegt dieser Umfangsflächenspalt nicht in einer einzigen Spaltwalzenquerschnittsebene, sondern wandert entlang seines Umfangsverlaufs von einer Spaltwalzenquerschnittsebene zu einer benachbarten Spaltwalzenquerschnittsebene usw.

Insofern kann mittels eines derartigen Umfangsflächenspalts Mittel zum Vermeiden eines kritischen Eintauchens eines Materialbahnrandes radial in den Umfangsflächenspalt hinein ausgestaltet werden.

Bevorzugt weist der Umfangsflächenspalt einen alternierenden Spaltverlauf auf, wodurch der im Sinne der Erfindung ausgestaltete Umfangsflächenspalt hinsichtlich seines Spaltverlaufs räumlich axial begrenzt werden kann.

Der Begriff "Axialhöhenverlauf" beschreibt im Sinne der Erfindung eine axiale Wegverlagerung des Umfangsflächenspalts quer zur Umfangsrichtung der Spreizwalze; und zwar in Bezug auf die Rotationsachse, welche die axiale Richtung an der Spreizwalze definiert, oder die Längserstreckung der Spreizwalze.

Mit anderen Worten ändert der Umfangsflächenspalt im Verlauf seiner länglichen Ausdehnung in Umfangsrichtung seine axiale Position an der Umfangsfläche der Spreizwalze.

Dies führt dazu, dass zwei in Umfangsrichtung nebeneinanderliegende Umfangsspaltpunkte bzw. Umfangsspaltbereiche eines Umfangsflächenspalts eine axial voneinander verschiedene Axiallage an der Spreizwalze besitzen.

Gemäß einem bevorzugten Ausführungsbeispiel sei zu verstehen, dass zwei in Umfangsrichtung nebeneinander liegende, am selben Spreizelementering angeordnete, Spreizelemente axial versetzt sind.

Bevorzugt bezieht sich eine Axialhöhe auf die Mittenebene der Spreizwalze. Alternativ kann die Axialhöhe auch von einem Spreizwalzenende aus gemessen werden. Dies kann sich auch oder nur auf die Basis der Spreizelemente beziehen.

Vorteilhafterweise eignet sich die Erfindung sowohl für dickere wie auch für dünnere und sogar sehr dünne Materialbahnen.

Ein bevorzugte Ausführungsvariante sieht vor, dass der Umfangsflächenspalt dadurch erzeugt ist, dass einzelne Spreizelemente aus einer Vielzahl an in Umfangsrichtung nebeneinander angeordneten Spreizelementen axial ausgerückt sind. Insbesondere an einem einzigen Spreizelementering kann hierdurch bereits der Umfangsflächenspalt sehr einfach und präzise ausgebildet werden.

Der Begriff "axial ausgerückt" beschreibt im Sinne der Erfindung eine Verschiebung einzelner Spreizelemente, welche vorliegend auch als Zwischenspreizelemente bezeichnet werden können", in axialer Richtung, wobei diese axiale Richtung im Sinne der Erfindung die gleiche Hauptorientierung besitzt, wie die Mittelachse bzw. Rotationachse einer Spreizwalze bzw. eines Spreizelementerings.

Eine sehr einfach bauende Ausführungsvariante sieht vor, dass zwischen zwei in Umfangsrichtung mit einem Abstand voneinander beabstandeten Spreizelementen ein hierzu axial verschobenes Spreizelement angeordnet ist. Allein durch eine durch einen entsprechend gewählten Abstand geschaffene Lücke lässt sich ein Umfangsflächenspalt im Sinne der Erfindung konstruktiv einfach umsetzen, und zwar bereits schon mit einem einzelnen Spreizelementering.

Ist der Umfangsflächenspalt in axialer Richtung axial flexibel veränderbar ausgebildet, kann das kritische Eintauchen eines Materialbahnrandes zwischen einzelne Spreizelemente wesentlich effektiver verhindert werden. Ferner können die einzelnen Spreizelemente in axialer Richtung eine unverändert sehr vorteilhafte Spreizwirkung entfalten.

Insofern ist es ebenfalls vorteilhaft, wenn der Umfangsflächenspalt flexible Seitenbegrenzungsabschnitte aufweist, wobei diese flexiblen Seitenbegrenzungsabschnitte durch die einzelnen Spreizelemente ausgestaltet sind. Hierdurch lässt der Effekt eines insbesondere in axialer Richtung "wanderbaren" Umfangsflächenspalts begünstigen, wodurch das kritische Eintauchen eines Materialbahnrandes zwischen einzelne Spreizelemente einerseits signifikant verhindert und aber auch die Spreizwirkung eines Spreizelementerings bzw. einer Spreizwalze andererseits verbessert werden kann.

Eine weitere konstruktiv einfache Ausgestaltung sieht vor, dass der Umfangsflächenspalt quer zur Umfangsrichtung gebogen, vorzugsweise mehrfach gebogen, ausgestaltet ist. Ist der Umfangsflächenspalt quer zur Umfangsrichtung gebogen, liegt dieser nicht in einer einzigen Spaltwalzenquerschnittsebene, sondern wandert entlang seines Umfangsverlaufs von einer Spaltwalzenquerschnittsebene zu einer benachbarten Spaltwalzenquerschnittsebene usw., wodurch ein Eintauchen eines Materialbahnrands in den Umfangsflächenspalt wirkungsvoll unterbunden werden kann.

Ferner ist es vorteilhaft, wenn der Umfangsflächenspalt quer zur Umfangsrichtung wenigstens eine Kurve, insbesondere eine Sinuskurve, ausgestaltet. Durch einen kurvigen Verlauf kann ebenfalls eine Verschiebung des Umfangsflächenspalts in verschiedene Spaltwalzenquerschnittsebenen erzielt werden.

Bevorzugt sind mehr als eine Kurve vorgesehen, so dass ein alternierender Verlauf des Umfangsflächenspalts einfach erzeugt werden kann.

Darüber hinaus ist es vorteilhaft, wenn die Lage des Umfangsflächenspalts sich quer zur Umfangsrichtung stetig oder unstetig verändert.

Bei einer stetigen Veränderung weist der Umfangsflächenspalt einen eher "glatten" Kantenbereich auf. Ein derart sich stetig veränderlicher Umfangsflächenspalt kann beispielsweise durch kleinere Axialversatze von in Umfangsrichtung nebeneinander angeordneten Spreizelementen bzw. Kontaktflächenteilen eines einzigen Spreizelementeringe oder unmittelbar benachbarter Spreizelementeringe realisiert werden.

Bei einer unstetigen Veränderung weist der Umfangsflächenspalt einen eher gezackten Kantenbereich auf. Eine solche unstetige Veränderung kann konstruktiv einfach etwa durch entsprechend ausgeformte Kontaktflächenteile erzielt werden, welche beispielsweise teilweise ineinander eingreifen.

Variiert die Axialbreite des Umfangsflächenspalts quer zur Umfangsrichtung, kann zwischen einigen von axial unmittelbar benachbarten Spreizelementen bzw. Kontaktflächenteilen der Abstand reduziert werden, wodurch ebenfalls die Gefahr eines kritischen Eintauchens eines Materialbahnrandes in einen Umfangsflächenspalt hinein zur Gänze vermieden oder zumindest signifikant reduziert werden kann.

Ferner ist es vorteilhaft, wenn der Umfangsflächenspalt in Umfangsrichtung mäandrierend ausgebildet ist, wodurch sich ein unbeabsichtigtes Eintauchen eines Materialbahnrandes zwischen einzelnen Spreizelementen ebenfalls äußerst effektiv verhindern lässt.

Der vorliegende Umfangsflächenspalt kann insbesondere an einem einzelnen Spreizelementering konstruktiv einfach ausgebildet werden, wenn der Umfangsflächenspalt in Umfangsrichtung von quer zur Umfangsrichtung versetzten Spreizelementen unterbrochen ist.

Darüber hinaus kann der Umfangsflächenspalt auch sehr einfach konstruiert werden, wenn der Umfangsflächenspalt an einem Spreizelementering durch mindestens zwei in Umfangsrichtung verlaufende Reihen an Spreizelementen ausgestaltet ist. Weist ein einzelner Spreizelementering zwei Reihen von Spreizelementen auf, welche sich in Umfangsrichtung an dem Spreizelementering befinden, kann der gewünschte Umfangsflächenspalt baulich einfach mithilfe dieser zwei Reihen an Spreizelementen realisiert werden.

Insofern ist es vorteilhaft, wenn an dem Spreizelementering mindestens zwei Reihen an Spreizelementen angeordnet sind, wobei insbesondere die mindestens zwei Reihen axial zueinander versetzt angeordnet sind.

Vorteilhafterweise sind die Spreizelementeringe nicht mehr gerade, das heißt rechtwinkelig zu der Rotationsachse bzw. zu der Umfangsfläche der Spreizwalze, angeordnet, sondern unter einem Winkel, der von einem rechten Winkel verschieden ist, schräg an die Spreizwalze bzw. deren Rotationskörper angeordnet.

Zweckmäßig ist die Größe des Winkels so bemessen, dass der Spreizelementering eine Schräge aufweist, welche mindestens etwas breiter ist als die Breite des Spreizelementerings. Hierdurch reduziert sich die maximal übergreifende Spaltlänge von ein bis zwei Spreizelementbreiten, was praktisch ohne Beeinträchtigung ist, da die Gefahr des Einknickens der Warenbahn nicht auftritt.

Aufgrund der einem Spreizelementering innewohnenden Elastizität liegt dieser auch bei Schräglage glatt auf dem Rotationskörper der Spreizwalze auf, wodurch auch die einzelnen Spreizelemente ihre senkrechte Lage gegenüber der Rotationsachse beibehalten und somit die Schräge des Spreizringes auf die Spreizfunktion der Spreizwalze keinen oder einen nur vernachlässigbaren Einfluss ausübt, zumal auch die Spreizbewegung beim ersten Kontakt der flächigen Materialbahn mit dem auflaufenden Spreizelement stattfindet.

Ein im Sinne der Erfindung schräges Anordnen der Spreizelementeringe an einer Spreizwalze kann besonders einfach gelingen, wenn der Spreizelementering werksseitig bereits windschief ausgestaltet bzw. hergestellt ist.

Alternativ hierzu ist es vorteilhaft, wenn unmittelbar benachbarte Spreizelementeringe in Umfangsrichtung verdreht zueinander angeordnet sind. Sind unmittelbar benachbarte Spreizelementeringe in Umfangsrichtung verdreht zueinander angeordnet, so dass Spreizelemente dieser Spreizelementeringe in Längserstreckung der Spreizwalze nicht mehr mittig auf einer gemeinsamen geraden Axiallinie angeordnet sind, kann der Umfangsflächenspalt ebenfalls mit einem quer zur Umfangsrichtung veränderlichen Axialhöhenverlauf realisiert werden, indem Spreizelemente eines ersten Spreizelementerings zumindest teilweise in eine Lücke zwischen zwei Spreizelemente eines unmittelbar benachbarten Spreizelementerings usw. eingreifend angeordnet sind.

Vorteilhaft ist es darüber hinaus, wenn eine Umfangsrichtungsverdrehsicherung vorgesehen ist, mittels welcher ordnungsgemäß montierte Spreizelementeringe gegen ein unbeabsichtigtes Verdrehen in Umfangsrichtung der Spreizwalze gesichert sind.

Mittels der Umfangsrichtungsverdrehsicherung kann gewährleistet werden, dass sich Spreizelemente nicht unbeabsichtigt in Umfangsrichtung der Spreizwalze verdrehen und hierdurch miteinander verklemmen, wenn Spreizelemente unmittelbar benachbarter Spreizelementeringe miteinander zusammenarbeiten, um insbesondere einen Umfangsflächenspalt mit einem quer zur Umfangsrichtung veränderlichen Axialhöhenverlauf zu gewährleisten.

Die Umfangsrichtungsverdrehsicherung kann durch unterschiedlichst ausgebildete Mittel zum Versichern ausgestaltet sein, welche an einem Rotationskörper der Spreizwalze und/oder an den Spreizringelementen realisiert sein können.

Konstruktiv besonders einfach lassen sich zueinander benachbarte Spreizelementeringe gegenseitig verdrehsichern, wenn unmittelbar benachbarte Spreizelementeringe mittels einer Feder-Nutverbindung wirkverbunden sind.

Der Aufbau insbesondere eines Spreizelementerings kann vorteilhaft weiterentwickelt werden, wenn Spreizelemente an einem Federelement der Feder-Nutverbindung angeordnet sind. Hierdurch kann konstruktiv besonders einfach ein Spreizelement axial ausgerückt an dem Spreizelementering angeordnet bzw. eine zweite Reihe an Spreizelementen an dem Spreizelementering etabliert werden.

Des Weiteren ist es vorteilhaft, wenn einem ein Spreizelement aufweisenden Federelement ein Nutelement axial gegenüberliegend angeordnet ist. Hierdurch können axial ausgerückte Spreizelemente von mehreren Spreizelementeringen axial hintereinander angeordnet werden.

Ferner sei auch noch auf einen Spreizelementering für eine Spreizwalze zum seitlichen Ausbreiten einer flächigen Materialbahn in axiale Spreizrichtungen mit einer Vielzahl an Spreizelementen hingewiesen, bei welchem die Vielzahl an Spreizelementen in Umfangsrichtung des Spreizelementerings hintereinander angeordnet sind, wobei der Spreizelementering eine Umfangsrichtungsverdrehsicherung aufweist, mittels welcher aneinander grenzende Spreizringelemente gegen ein unbeabsichtigtes Verdrehen in Umfangsrichtung gesichert sind.

Die Umfangsrichtungsverdrehsicherung kann, wie vorstehend bereits erwähnt, unterschiedlichst ausgebildet sein. Ist sie etwa Bestandteil eines Spreizelementerings, ist es vorteilhaft, wenn die Umfangsrichtungsverdrehsicherung an einem Tragringteil des Spreizelementerings angeordnet ist. Hierdurch bleiben die einzelnen Spreizelemente konstruktiv unberührt und funktional unbeeinflusst von der Umfangsrichtungsverdrehsicherung des Spreizelementerings.

Die Umfangsrichtungsverdrehsicherung kann zwischen benachbarten Spreizelementeringen sehr einfach wirken, wenn die Umfangsrichtungsverdrehsicherung an seitlichen Axialrändern eines Tragringteils des Spreizelementerings ausgestaltet ist.

Durch die hier beschriebenen Lösungen gelingt es, die an einer Spreizwalze vorhandenen und sich in Umfangsrichtung erstreckenden Umfangsflächenspalte nicht gerade senkrecht zur Rotationsachse auszugestalten, wie dies bisher im Stand der Technik üblich ist, sondem quer zur Umfangsrichtung gebogen bzw. kurvig. So kann verhindert werden, dass insbesondere an Materialbahnrändern oder Schnittstellen die flächige Materialbahn abknickt und eine Falte oder dergleichen und damit ein Qualitätsverlust entstehen kann.

Außerdem ist eine Merkmalskombination mit allen nachfolgenden Merkmalen oder auch nur einzelnen Merkmalen vorteilhaft hinsichtlich einer Walze zum Führen und Spreizen von Flachbahnen (Kunststoff-Folien, Papier, Gewebe, Vliese), die aus einer zylindrischen Tragwalze mit einem zylindrischen Mantel aus Gummiringen bestehen und einen dichten Besatz darstellen, jeder Gummiring aus einer Vielzahl von Vorsprüngen besteht, jeder Gummiring auf der Tragwalze nur einen Bruchteil der Walzengesamtlänge darstellt, jeder Vorsprung ein Einzelspreizelement darstellt, das völlig unabhängig von anderen benachbarten Vorsprüngen arbeitet, alle Vorsprünge pro Ring auf einem gemeinsamen Tragring aus vorzugsweise dem gleichen elastischem Material bestehen wie die Vorsprünge, jedes Einzelspreizelement durch den Druck der darüber laufenden Flachbahn eine Verformung von der Mitte zum Walzenende ausführt, welche die Spreizung oder Breitstreckung darstellt und jedes Einzelspreizelement zur Ausübung seiner Bewegung einen freien Raum benötigt, wobei der Freiraum bei Spreizringen, die üblicherweise hintereinander montiert werden, einen Ringspalt bilden, der ringförmige Spalt dazu führen kann, dass der Warenbahnrand beim Überlauf in diesen Ringspalt abknickt und somit stört, so dass dieser Ringspalt vermieden werden muss, und wobei sich die Walze dadurch auszeichnet, dass der Spalt, welcher den Bewegungsfreiraum bildet, jedes Einzelspreizelement gegenüber seinen benachbarten Einzelspreizelementen in axialer Richtung mindestens einen geringen Versatz aufweist, wodurch sich der zwischen den Kontaktflächen der Einzelspreizelemente notwenige Spalt bei jedem Einzelspreizelement axial und tangential verschiebt und somit eine geschlossene Ringbildung und damit die Gefahr des Warenbahneinknickens vermieden wird.

Ferner ist es in diesem Zusammenhang vorteilhaft, wenn der Versatz der Spalte zwischen den Einzelspreizelementen dadurch erzeugt wird, dass der Gummiring nicht senkrecht zur Mittelachse der Walze montiert wird, sondern unter einem Winkel von 4° bis 15° gegenüber der Mittelachse, so dass jedes Spreizelement gegenüber seinem Nachbarelement in axialer und tangentialer Richtung eine kleine aber deutliche Spaltverschiebung aufweist, die so bemessen ist, dass mindestens beim dritten Element der Spalt um mehr als seine Spaltbreite komplett verschoben ist.

Darüber hinaus ist es vorliegend vorteilhaft, wenn auf dem Tragring, der die Einzelspreizelemente trägt, die Spreizelemente so angeordnet sind, dass jedes zweite Spreizelement axial nahezu um die Hälfte seiner axialen Breite verschoben angebracht ist, so dass der Spalt maximal die Länge einer umfänglichen Spreizelementbreite aufweist und dann deutlich versetzt weiterläuft.

Außerdem ist es vorteilhaft, wenn der Tragring nur die halbe axiale Breite aufweist und nur mit der Hälfte der Spreizelemente gleichmäßig am Umfang verteilt bestückt ist und durch das Zusammenschieben eines zweiten gleichen Tragringes mit einer Verdrehung um eine halbe Teilung ein normal bestückter Tragring entsteht, dessen axialer Spalt maximal die Länge einer Spreizelementbreite beträgt.

Zweckmäßig ist es ebenfalls, wenn die Gestaltung des Kontaktteiles bei jedem Spreizelement so ausgeführt ist, dass die Kontaktfläche so in das Spreizelement des benachbarten Spreizringes eingreift, dass kein Spalt entstehen kann, aber die Dimensionierung so erfolgt, dass sich jedes Spreizelement noch frei bewegen kann und völlig unabhängig seine Spreizaufgabe nachkommen kann.

Eine alternative Ausführungsvariante sieht auch noch vor, dass der Spreizelementering wenigstens ein Vielzahnprofil umfasst, welches an einem Rand eines Tragringteils des Spreizelementerings angeordnet ist. Eine derartige Vielzahlprofil ermöglicht eine definierte formschlüssige Verbindung zweier Spreizelementeringe, wobei durch die Vielzahl an vorhandenen Zahnelementen eine besonders leichte Montage verdrehgesicherte Montage von Spreizelementeringen gewährleistet werden kann.

Vorzugsweise sind zwei solcher Vielzahlprofile an einem Spreizelementering angeordnet, so dass dieser Spreizelementering vorne und hinten mit jeweils einem anderen Spreizelementering im Sinne der Erfindung wechselwirken kann.

Ist ein Spreizelement des Spreizelementerings an einem Zahnelement eines an dem Spreizelementering ausgebildeten Vielzahnprofils angeordnet, lässt sich dieses Spreizelement konstruktiv einfach aus einer Reihe an sonstigen Spreizelementen ausrücken.

Es versteht sich, dass auch mehr als ein Spreizelement an einem Zahnelement des Vielzahnprofils angeordnet sein kann, wenn dieses Zahnelement in Umfangsrichtung des Spreizelementerings entsprechend breit genug ausgeführt ist.

Die Aufgabe wird nach einem zweiten Aspekt vorliegender Erfindung vorliegend auch noch von einer Spreizwalze zum seitlichen Ausbreiten einer flächigen Materialbahn in axiale Spreizrichtungen mit einer Vielzahl an einzelne Spreizelemente umfassende Spreizelementeringen gelöst, welche eine Umfangsfläche bilden, bei welcher zwischen einzelnen Spreizelementen an der Umfangsfläche ein Umfangsflächenspalt gebildet ist, welcher sich in Umfangsrichtung der Spreizwalze herum erstreckt, wobei sich die Spreizwalze durch einen Spreizelementering nach einem der hier beschriebenen Merkmale auszeichnet. Hierdurch können die vorliegend beschriebenen Effekte und Vorteile zweckmäßigerweise an einer entsprechend ausgerüsteten Spreizwalze einzeln oder auch kumuliert erzielt werden.

Eine weitere Ausführungsvariante sieht hinsichtlich der vorgeschlagenen Spreizwalzen vor, dass Spreizelementeringe schräg an der Spreizwalze angeordnet sind. Hierdurch liegt der Umfangsflächenspalt nicht mehr in einer einzigen Spaltwalzenquerschnittsebene, wodurch ein unerwünschtes Eintauchen des Materialbahnrandes in einen Umfangsflächenspalt hinein verhindert werden kann.

Um die Spreizelementeringe außerdem leichter auf einer Spreizwalze montieren zu können, ist eine Vorrichtung zum Montieren von Spreizelementeringen auf einer Tragwalze vorteilhaft, welche aus einem Aufnahmering zur Aufnahme des Spreizelementerings und aus einem Andrückring zur Fixierung des Spreizelementerings auf der Tragwalze und gegenüber seinen benachbarten Spreizringen, wobei sich die Vorrichtung dadurch auszeichnet, dass der Montagering dünnwandig ist, mit einem axial durchgehenden Schlitz versehen ist, wodurch die Vorspannung der Spreizelementeringe auf die Tragwalze nahezu verlustfrei übertragen werden kann.

Es sei auch noch ein Montagehilfsring zum Montieren von Spreizelementeringen auf einer Spreizwalze mit einem Aufnahmekörper zum Aufnehmen von Spreizelementeringen erwähnt, bei welchem der der Aufnahmekörper mindestens eine Stufe aufweist, um Spreizelementeringe axial festlegen zu können.

Mittels eines derartigen Montagehilfsrings vereinfacht sich die Montage von Spreizelementeringen auf einer Spreizwalze erheblich.

Vorzugsweise weist Montagehilfsring einen Schlitz auf, wobei auf einen Tragkörper einer Spreizwalze durch den Schlitz eine Kraft durch die Vorspannung der Spreizringelemente erzeugbar ist, welche derart ausreichend ist, um den Montagering ortsfest an der Spreizwalze zu klemmen.

Durch die Stufe können sich Spreizelementeringe auch axial an dem Montagering abstützen, wodurch sich die Montage der Spreizelementeringe vereinfachen lässt.

Ist der Montagehilfsring aus einem elektrisch leitenden Material hergestellt, kann der Montagehilfsring vorteilhafterweise zusätzlich zum Ableiten elektrostatischer Aufladung verwendet werden.

Da Spreizelementeringe in der Regel unter Spannung auf einen Rotationskörper einer Spreizwalze montiert werden, kann es von Vorteil sein, wenn durch entsprechende Montagehilfsmittel der Montagevorgang vereinfacht wird. Insofern ist ein Montagehilfsring vorteilhaft, auf welchen Spreizelementeringe vormontiert werden können und welche nach einer solchen Montage auf der Spreizwalze die Spreizelementeringe in ihrer Lage zusätzlich fixieren können. Um einen derartigen Montagehilfsring auch bei geringen Abweichungen eines Spreizwalzendurchmessers einsetzen zu können, wird er vorzugsweise einseitig geschlitzt. So kann er sich geringen Durchmesserunterschieden gut anpassen und auch die Vorspannung der Spreizelementeringe zur Lagefixierung nutzen.

Letztendlich sei noch ein Verfahren zum Betreiben einer kunststoffformgebenden und/oder warenbahnfördernden Anlage mit einer hier offenbarten Spreizwalze oder eines hier offenbarten Spreizelementerings zum Vermeiden eines kritischen Eintauchens eines Materialbahnrandes radial in den Umfangsflächenspalt hinein erwähnt.

Es versteht sich, dass die Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Zusätzlich sind weitere Merkmale, Effekte und Vorteile vorliegender Erfindung anhand anliegender Zeichnung und nachfolgender Beschreibung erläutert, in welchen beispielhaft eine Spreizwalze und unterschiedliche Spreizelementeringe hierfür dargestellt und beschrieben sind.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen, um Wiederholen zu vermeiden.

In der Zeichnung zeigen:
- Figur 1: schematisch eine Längsschnittansicht einer Spreizwalze mit einer Vielzahl an in Längserstreckung der Spreizwalze axial hintereinander angeordneten Spreizelementeringen, zwischen welchen jeweils ein Umfangsflächenspalt mit einem quer zur Umfangsrichtung veränderlichen Axialhöhenverlauf vorhanden ist;
- Figur 2: schematisch eine Aufsicht einer Abwicklung der Umfangsfläche der in der Figur 1 gezeigten Spreizwalze mit dem kurvigen Umfangsflächenspalt;
- Figur 3: schematisch eine Schnittansicht eines Ausschnitts der Spreizwalze aus der Figur 1 mit beispielhaft schräg daran angeordneten alternativen Spreizelementeringen;
- Figur 4: schematisch eine Seitenansicht eines alternativen Spreizelementerings mit daran quer zur Umfangsrichtung axial versetzten Spreizelementen;
- Figur 5: schematisch eine erste Detailansicht des in der Figur 4 gezeigten alternativen Spreizelementerings;
- Figur 5.1: schematisch eine Aufsicht einer Abwicklung der Umfangsfläche von Spreizringelementen gemäß der Figur 5;
- Figur 6: schematisch eine weitere Detailansicht des in den Figuren 4 und 5 gezeigten alternativen Spreizelementerings;
- Figur 7: schematisch eine Seitenansicht eines ersten Spreizelementrings einer Ringanordnung (vgl. Figur 11);
- Figur 8: schematisch eine Vorderansicht des in der Figur 7 gezeigten ersten Spreizelementerings;
- Figur 9: schematisch eine Seitenansicht eines zweiten Spreizelementrings einer Ringanordnung (vgl. Figur 11)
- Figur 10: schematisch eine Vorderansicht des in der Figur 9 gezeigten zweiten Spreizelementerings;
- Figur 11: schematisch eine Ringanordnung aus zwei unmittelbar benachbarten und axial hintereinander angeordneten Spreizelementeringen aus den Figuren 7 bis 10;
- Figur 12: schematisch ein Ausschnitt einer Umfangsfläche einer Anordnung aus benachbarten und axial hintereinander angeordneten Spreizelementeringen aus den Figuren 7 bis 11;
- Figur 13: schematisch eine Seitenansicht eines Montagehilfsrings zum Montieren von Spreizelementeringen;
- Figur 14: schematisch eine Anordnung von axial hintereinander angeordneten Montagehilfsringen mit Spreizelementeringen;
- Figur 15: schematisch eine andere Anordnung von axial hintereinander angeordneten Montagehilfsringen mit Spreizelementeringen;
- Figur 16: schematisch ein Ausschnitt einer Aufsicht von Kontaktflächenteilen anderer Spreizelementeringe mit einem axial veränderlichen Umfangsflächenspalt;
- Figur 17: schematisch eine Seitenansicht eines einzelnen Spreizelements der Spreizelementeringe aus der Figur 16;
- Figur 18: schematisch eine Aufsicht eines einzelnen Spreizelements der Spreizelementeringe aus der Figur 16;
- Figur 19: schematisch eine Seitenansicht der axial hintereinander angeordneten Spreizelementeringe aus der Figur 16;
- Figur 20: schematisch eine weiterer Spreizelementering mit einem mäandrierenden Umfangsflächenspalt;
- Figur 21: schematisch eine erste perspektivische Ansicht eines weiterentwickelten Spreizelementerings mit einem mäandrierenden Umfangsflächenspalt; und
- Figur 22: schematisch eine weitere perspektivische Ansicht des weiterentwickelten Spreizelementerings aus der Figur 21.

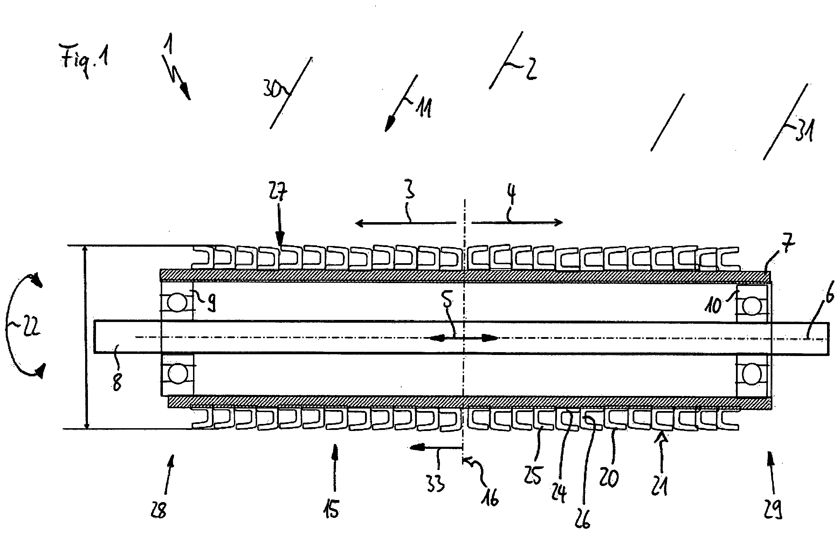

Die in der Figur 1 beispielhaft gezeigte Spreizwalze 1 zum seitlichen Ausbreiten einer flächigen Materialbahn 2 (nur schematisch durch vier Striche angedeutet) in axiale Spreizrichtungen 3 und 4 entlang der Längserstreckung 5 der Spreizwalze 1 weist einen um eine Rotationsachse 6 rotierbaren Rotationskörper 7 auf.

Der Rotationskörper 7 ist hierbei zylindrischer Form und er kann aus unterschiedlichsten Materialien hergestellt sein. In diesem Ausführungsbeispiel ist der Rotationskörper 7 durch ein Hohlrohrsegment (nicht explizit beziffert) hergestellt, durch welches hindurch ein Achsenteil 8 gesteckt ist, wobei die Rotationsachse 6 durch das Achsenteil 8 formuliert ist.

Der Rotationskörper 7 und das Achsenteil 8 sind zueinander durch zwei Kugellager 9 und 10 drehbar zueinander gelagert. Während also der Rotationskörper 7 drehbar an dem Achsenteil 8 gelagert ist, ist das Achsenteil 8 drehfest an einem Maschinengestell (hier nicht gezeigt) zum Aufwickeln von flächigen Materialbahnen gelagert.

Die Spreizwalze 1 im Allgemeinen und der Rotationskörper 7 im Besonderen werden durch die Bewegung der Materialbahn 2 in Rotation versetzt, sobald die Spreizwalze 1 mit der laufenden Materialbahn 2 in Wirkkontakt gebracht wird, wenn diese in Transportrichtung 11 bewegt wird.

Auf dem Rotationskörper 7 sind Spreizelementeringe 15 (nur exemplarisch beziffert) so montiert, dass sie von der Mittenebene 16 der Spreizwalze 1 nach axial außen spreizen. Beispielsweise spreizen die links der Mittenebene 16 montierten Spreizelementeringe 15 in die axiale Spreizrichtung 3 nach links, während die rechts der Mittenebene 16 montierten Spreizelementeringe 15 in die axiale Spreizrichtung 4 nach links spreizen.

Jeder der Spreizelementeringe 15 umfasst eine Vielzahl an Spreizelementen 20, mittels welchen auch die eigentliche Umfangsfläche 21 der Spreizwalze 1 gebildet ist.

Diese Umfangsfläche 21 bildet die Umhüllende der Spreizwalze 1 und formuliert somit den Außendurchmesser der Spreizwalze 1.

Die Spreizelemente 20 eines Spreizelementerings 15 sind in Umfangsrichtung 22 dieses Spreizelementerings 15 bzw. der Spreizwalze 1 nebeneinander an dem Spreizelementering 15 angeordnet.

Ein Spreizelementering 15 besteht im Wesentlichen aus einem radial weiter innen liegenden Tragringteil 24, mehreren radial weiter außen liegenden Kontaktflächenteilen 25 (nur exemplarisch beziffert) sowie mehreren Stegteilen 26 (exemplarisch beziffert), mittels welchen die einzelnen Kontaktflächenteile 25 mit dem Tragringteil 24 wirkverbunden sind. Sind die Stegteile 26 etwa v-förmig ausgebildet, können spezielle Spreizeigenschaften an der jeweiligen Spreizwalze 1 vorteilhaft eingestellt werden.

Ein Spreizelement 20 ist hierbei im Wesentlichen durch jeweils ein Kontaktflächenteil 25 und ein Stegteil 26 verkörpert, wobei das Tragringteil 24 im Sinne eines Fußteils (nicht gesondert beziffert) des Spreizelements 20 verwendet wird, um das Spreizelement 20 an dem Rotationskörper 7 zu befestigen.

Insofern kann gesagt werden, dass alle Spreizelemente 20 eines Spreizelementerings 15 ein gemeinsames Fußteil aufweisen, welches durch das einzige Tragringteil 22 des Spreizelementerings 15 ausgestaltet ist.

Damit die Spreizelemente 20 der einzelnen Spreizelementeringe 15 an der Spreizwalze 1 ungehindert arbeiten können, ist zwischen den Spreizelementeringen 15 jeweils ein Umfangsflächenspalt 27 vorgesehen. Vorzugsweise beträgt die Breite des Umfangsflächenspalts 27 ein bis zwei Millimeter, so dass eine ausreichende Verformung der Spreizelemente gewährleistet werden kann.

Genauer gesagt besteht der Umfangsflächenspalt 27 im Bereich der Umfangsfläche 21, und zwar insbesondere zwischen zwei axial hintereinander angeordneten Kontaktflächenteile 25.Das Tragringteil 24 liegt bündig auf dem Rotationskörper 7 auf und ist wie der ganze Spreizelementering 15 aus elastischem gummiähnlichem Material.

Die Hauptwirkung der einzelnen Spreizelemente 20 besteht darin, dass durch den Materialbahndruck der über die Spreizwalze 1 laufenden flächigen Materialbahn eine leichte Verformung der Spreizelemente 20 zum jeweiligen Ende 28 bzw. 29 der Spreizwalze 1 entsteht, die zwar klein ist, aber sich pro Umdrehung entsprechend der Anzahl der Spreizelemente wiederholt, so dass die Summe der Verformung zu einer deutlichen, aber schonenden Spreizung der flächigen Materialbahn 2 führt.

Die Verformungen haben den Effekt, dass die flächige Materialbahn 2 ebenfalls in axialer Spreizrichtung 3 oder 4 bzw. in axialer Richtung der Längserstreckung 5 der Spreizwalze 1 nach außen bewegt bzw. gespreizt wird, wodurch eventuelle Falten in der Materialbahn 2 eliminiert werden, so dass die Materialbahn 2 bei ihrem Transport in Transportrichtung 11 insgesamt glatt gehalten werden kann.

Damit die Materialbahn 2 möglichst symmetrisch mittels der Spreizwalze 1 in Spreizrichtungen 3 und 4 axial gespreizt werden kann, sind die Spreizelemente 20 unterschiedlich ausgerichtet an dem Rotationskörper 7 angeordnet.

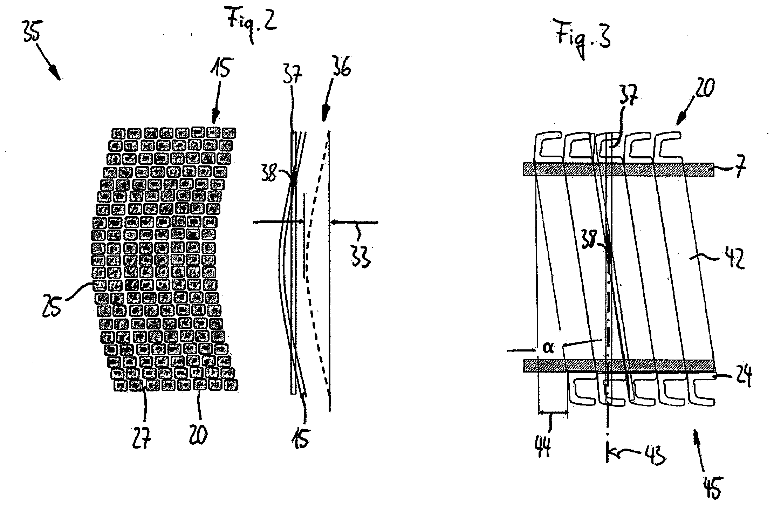

Um nun zu vermeiden, dass ein Materialbahnrand 30 bzw. 31 der flächigen Materialbahn 2 in einem kritischen Maß in einen der Umfangsflächenspalte 27 nach radial innen eintauchen kann, wenn die flächige Materialbahn 2 mit der Spreizwalze 1 wechselwirkt, weist der Umfangsflächenspalt 27 quer zur Umfangsrichtung 22 einen Verlauf 36 (s. Figur 2) mit veränderlichen Axialhöhen 33 auf.

Mittels diesem Umfangsflächenspalt 27 wird verhindert, dass ein Randende einer flächigen Materialbahn 2 ungewollt in diesen Umfangsflächenspalt 27 einknickt, was im Stand der Technik bei manchen flächigen Materialbahnen 2 der Fall sein kann.

In diesem Ausführungsbeispiel werden die Axialhöhen 33 in Bezug auf die Mittenebene 16 bestimmt.

Sie können beispielsweise jedoch auch ausgehend von den Enden 28 bzw. 29 der Spreizwalze gemessen werden.

Die veränderlichen Axialhöhenverläufe 36 (Sinuskurve, s. Figur 2) der an der Spreizwalze 1 ausgebildeten Umfangsflächenspalte 27 sind aufgrund der geschnittenen Darstellung der Figur 1 nicht erkennbar, jedoch gemäß der Darstellung nach der Figur 2, welche eine Abwicklung 35 der Umfangsfläche 21 der Spreizwalze 1 zeigt, wobei die beispielhaft gekrümmten Umfangsflächenspalte 27 zwischen den benachbarten Spreizelementeringen 15 erkennbar sind.

Ferner ist neben dem veränderlichen Axialhöhenverlauf 36 des Umfangsflächenspalts 27 im Vergleich zu einem nur exemplarisch illustrierten herkömmlichen senkrecht zur Rotationsachse verlaufenden geraden Spalt 37 zusätzlich noch ein diesbezüglich in Umfangsrichtung 22 verbleibender geringer Restspaltabschnitt 38 gekennzeichnet. Durch den Restspaltabschnitt 38 wirkt nur noch eine kleinere Fläche ohne Abstützeffekt, wodurch die Fläche so klein ist, dass ein negativer Einfluss bezüglich eines unbeabsichtigten Eintauchens von Randenden einer flächigen Materialbahn 2 quasi nicht mehr vorhanden ist.

Bei einer sich drehenden Spreizwalze 1 verläuft der Umfangsflächenspalt 27 nahezu sinusförmig, dies ist aber nur optisch wahrnehmbar, hat aber ansonsten keinen nachteiligen Einfluss auf das Spreizverhalten der Spreizwalze 1, da jedes Spreizelement 20 auf der Spreizwalze 1 ortsfest bleibt.

Durch den gebogenen bzw. gekrümmten Umfangsflächenspalt 27 ist eine erste Ausführungsmöglichkeit von Mitteln 40 zum Vermeiden eines kritischen radialen Eintauchens des Materialbahnrandes 30 bzw. 31 in den Umfangsflächenspalt 27 hinein realisiert.

Gemäß der Darstellung nach der Figur 3 sind schräg auf den Rotationskörper 7 montierte Spreizelementeringe 42 gezeigt, wodurch eine alternative Maßnahme zum Beseitigen von senkrecht zur Rotationsachse 7 ausgebildeten Spalten 37 (vgl. auch Figur 2) geschaffen werden kann. Durch die schräg angestellte Montage ergibt sich wiederum ein sehr kleiner Restspaltabschnitt 38 an einer Spaltwalzenquerschnittsebene 43, in welcher der Restspaltabschnitt 38 mittig angeordnet ist.

Die Fläche (nicht gesondert beziffert) des Restspaltabschnitts 38 ist so klein, dass ihr negativer Einfluss auf den Materiabahnrand 30 bzw. 31 nicht mehr auftritt.

Hierbei sollte die Schräge mit dem Anstellwinkel λ so bemessen sein, dass sie etwas größer ist als die Breite 44 des jeweiligen Spreizelementerings 42, so dass sich eine Restspaltlänge in Umfangsrichtung 22 von maximal zwei Spreizelementeringbreiten 44 ergibt.

Da die Tragringteile 24 unter Spannung auf den Rotationskörper 7 aufgezogen werden, bleiben die Tragringteile 24 immer im Vollkontakt mit dem Rotationskörper 7, so dass die Spreizelemente 20 ihre Ursprungsform und axiale Ausrichtung beibehalten.

Da die Spreizung bei dieser Variante immer mit dem ersten Auflaufen der flächigen Materialbahn. 2 auf das Spreizelement 20 vollzogen wird, hat die Schrägstellung der Spreizelementeringe 42 keinen Einfluss auf die Spreizung. Die Wirkung des Spreizens bleibt die gleiche, da sich lediglich die Position der einzelnen Spreizelemente 20 zueinander geringfügig verändert, die Spreizwirkung ist auch weiterhin für beide Spreizwalzendrehrichtungen und für beide Spreizwalzenseiten gleich.

Gemäß einer weiteren vorteilhaften, hier aber nicht gezeigten Ausführung können zur Montageerleichterung die Spreizelementeringe 42 bereits werksseitig windschief ausgebildet sein.

Mittels der schrägen Spreizelementeringe 42 können im Sinne der Erfindung weitere Mitteln 45 zum Vermeiden eines kritischen radialen Eintauchens des Materialbahnrandes 30 bzw. 31 in den Umfangsflächenspalt 27 hinein realisiert werden.

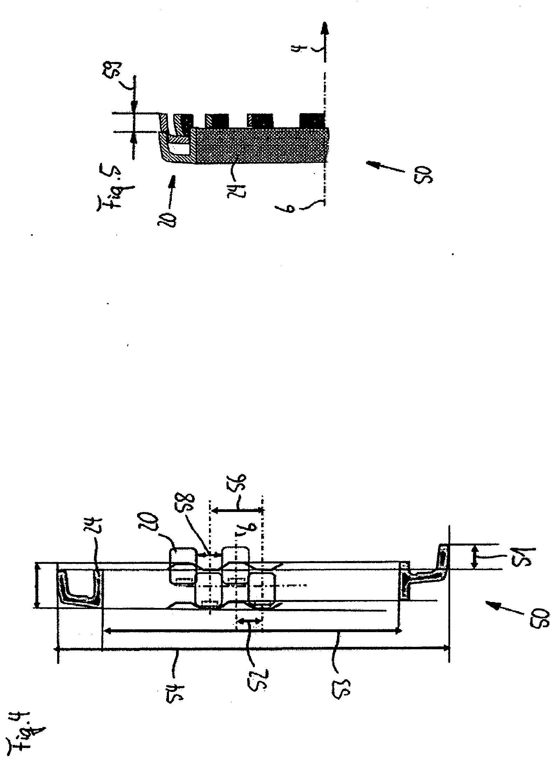

Gemäß den Darstellungen der Figuren 4 bis 6 ist eine andere Möglichkeit der Spreizwalzengestaltung dargestellt.

In diesem Ausführungsbeispiel werden alternative Spreizelementeringe 50 verwendet, bei denen die einzelnen Spreizelemente 20 derart zueinander abwechselnd versetzt sind, dass die einzelnen Spreizelemente 20 um eine halbe Spreizelementbreite 51 axial verschoben sind.

Das heißt jedes zweite Spreizelement 20 ist in axialer Richtung um die Spreizelementbreite 51 axial versetzt. Dadurch reduziert sich auch ein Spaltlängenabschnitt 52 auf das Maß 1/36 des Spreizelementeringumfangs und ist damit unschädlich für ein kritisches Eintauchen.

Die einzelnen Spreizelementeringe 50 sind in ihren Abmessungen Innendurchmesser 53 und Außendurchmesser 54 unverändert. Das Tragringteil 24 behält seine Breite bei, ebenso bleibt auch die wirksame Kontaktfläche bei den Spreizelementen 20 gleich und damit gleich wirksam.

Mit der Bezugsziffer 55 ist noch der Spreizelementering mit halber Spreizelementeanzahl beziffert.

Die Bezugsziffer 56 bezeichnet noch ein Maß, welches 1/18 des Umfangs beträgt.

Jedenfalls ist aus den Figuren 4 bis 6 gut zu erkennen, dass Spreizelemente 20 quer zur Umfangsrichtung 22 (vgl. auch Figur 1) und damit auch in axialer Richtung 3 bzw. 4 versetzt zueinander an dem Spreizelementering 50 angeordnet sind, wodurch sich entlang des Umfangsflächenspalts 27 in Umfangsrichtung 22 eine veränderliche Axialverschiebung dieses Umfangsflächenspalts 27 ergibt.

Hierbei sind Spreizelemente 20 in Umfangsrichtung 22 mit einem Abstand 58 voneinander beanstandet nebeneinander angeordnet sind, der mindestens die Breite eines Spreizelements 20 in Umfangsrichtung 22 beträgt. Durch den Abstand 58 wird eine entsprechende Lücke (hier nicht eigenständig beziffert) in Umfangsrichtung 22 des Spreizelementerings 50 geschaffen.

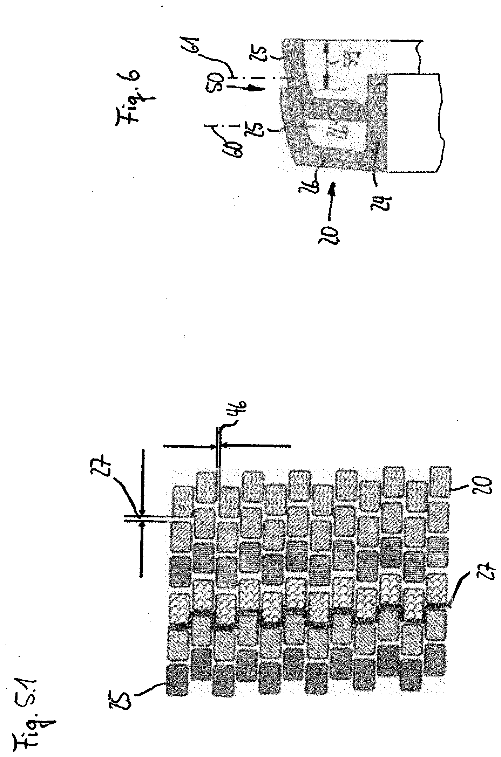

Gemäß den Darstellungen nach den Figuren 5 und 6 ist nochmals gut verdeutlicht, wie in Umfangsrichtung 22 nebeneinander angeordnete Spreizelemente 20 des alternativen Spreizelementerings 50 um einen Axialversatz 59 axial versetzt zueinander an dem Spreizelementering 50 platziert sind.

Hierbei sind an dem alternativen Spreizelementering 50 axial verschobene Spreizelementen 20 zumindest teilweise von dem Tragringelemente 24 verdeckt.

Die Darstellung nach der Figur 5.1 verdeutlicht den vorliegenden Zusammenhang nochmals. Die Abwicklung bzw. der Abdruck der Kontaktfläche verdeutlicht die Verteilung der Kontaktflächen (Kontaktflächenteile 25) der einzelnen Spreizelemente 20. Man erkennt deutlich den Verlauf des axialverschobenen Umfangsflächenspaltes 27 (nur beispielhaft beziffert). Der jeweilige Umfangsflächenspalt 27 weist hierbei sprunghafte Axialversätze auf, mittels welchen etliche Richtungsänderungen des Umfangsflächenspaltes 27 einhergehen. Eingezeichnet ist beispielhaft ferner noch ein in axialer Spreizrichtung 3 bzw. 4 verlaufender Spalt 46.

Insbesondere gemäß der Darstellung nach der Figur 6 ist durch das teilweise verdeckt dargestellte Spreizelement 20 gut zu erkennen, dass die Spreizelemente 20 einerseits in Umfangsrichtung 22 nebeneinander an dem Spreizelementering 50 und andererseits zusätzlich noch in axialer Richtung 3 bzw. 4 versetzt sind.

Hierbei liegen erste der Spreizelemente 20 hinsichtlich ihrer axialen Mitte in einer ersten Spaltwalzenquerschnittsebene 60 und weitere Spreizelemente 20 hinsichtlich ihrer axialen Mitte in einer hierzu planparallelen Spaltwalzenquerschnittsebene 61. Entsprechend verschoben verläuft auch der Umfangsflächenspalts 27 an dem alternativen Spreizelementering 50.

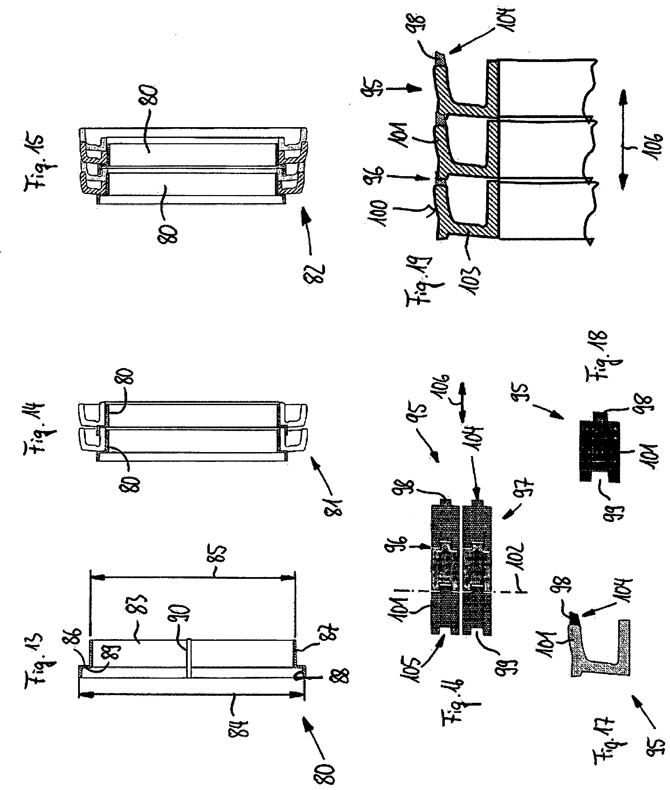

Bei dieser Spreizelementeringart wird für das Zusammenfügen mehrerer solcher Spreizelementeringe 50 durch geeignete Formgebung des Tragringteils 24 dafür Sorge getragen, dass die Spreizelementeringe 50 immer Lücke auf Lücke montiert werden (vgl. auch Figur 19).

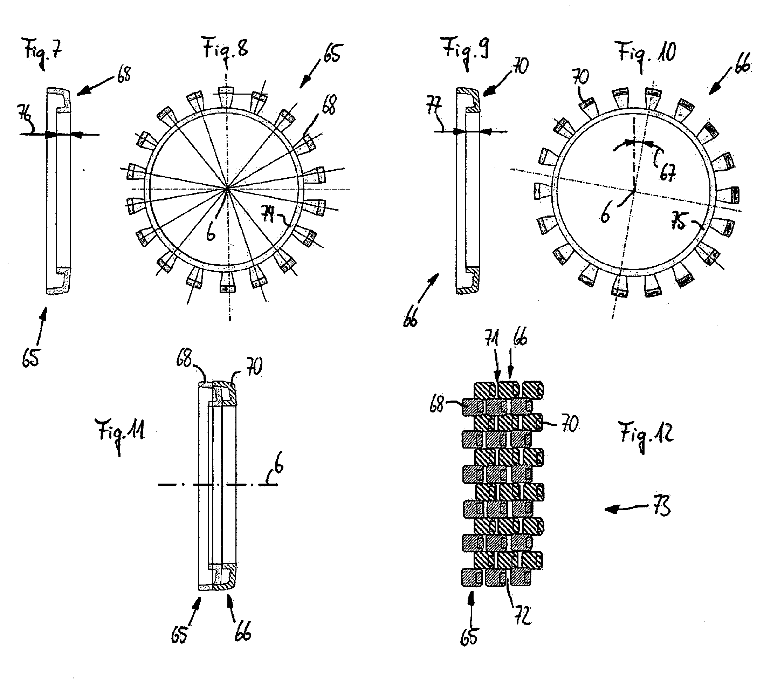

Gemäß einem weiteren in den Figuren 7 bis 12 gezeigten Ausführungsbeispiel werden zwei Spreizelementeringe 65 und 66 um einen Verdrehwinkel 67 verdreht zueinander und bezogen auf die Rotationsachse 6 axial hintereinander angeordnet, so dass Spreizelemente 68 des ersten Spreizelementerings 65 in Lücken 69 zwischen Spreizelemente 70 des zweiten Spreizelementerings 66 eingreifen und umgekehrt.

Hierdurch ergibt sich ein unstetig verlaufender Umfangsflächenspalt 71 mit axial zueinander versetzten Umfangsflächenspaltteilabschnitten 72 (nur exemplarisch beziffert), wie bezüglich der in der Figur 12 dargestellten Abwicklung 73 gut gezeigt ist.

Bei der in den Figuren 7 bis 12 gelehrten Lösung werden nur einfach bauende Spreizelementeringe 65 und 66 benötigt, welche nur mit der halben Zahl an Spreizelementen 68 bzw. 70 ausgestattet sind.

Diese Spreizelemente 68 und 70 sind jeweils auf einem Tragringteil 74 bzw. 75 angebracht, welche jeweils lediglich die halbe Breite 76 bzw. 77 aufweisen.

Durch diese Breitenreduzierung ist es ohne weiteres möglich, zwei im Wesentlichen gleiche Spreizelementeringe 65 und 66 nach Drehung um eine halbe Teilung (siehe Figur 10, Verdrehwinkel 67) ineinander zu schieben, so wie dies in Figur 11 dargestellt ist.

Werden alle Spreizelementeringe 65 und 66 zum Ausrüsten für eine Spreizwalze 1 so zusammengeschoben, erhält man ein Kontaktschema bzw. die in Figur 12 illustrierte Abwicklung 73, bei welchem bzw. bei welcher die Problematik wie bei einer herkömmlichen Ringspaltbildung nicht mehr auftreten kann.

Auch in diesem Ausführungsbeispiel ist bevorzugt eine nicht dargestellte Zentrierung vorgesehen, welche dafür sorgt, dass die einzelnen Spreizelementeringe 65 bzw. 66 immer Lücke auf Lücke montiert werden können, so dass jedes der Spreizelemente 68 bzw. 70 seine volle Bewegungsfreiheit behält.

Gemäß den Darstellungen der Figuren 13 bis 15 ist ein Montagehilfsring 80 gezeigt, mittels welchem Spreizelementeringe 81 (siehe Figur 14) bzw. 82 (siehe Figur 15) beispielsweise auf den Rotationskörper 7 der Spreizwalze 1 montiert werden können.

Der Montagehilfsring 80 besitzt einen dünnwandigen stufigen Aufnahmekörper 83 mit zwei unterschiedlichen Durchmessern 84 und 85, so dass zumindest eine Stufe 86 an dem Montagehilfsring 80 ausgebildet ist.

Der stufige Aufnahmekörper 83 und damit auch der Montagehilfsring 80 insgesamt zeichnet sich durch eine radial nach außen gerichtete Aufnahmefläche 87 zum Wechselwirken mit den Spreizelementeringen 81 bzw. 82 sowie durch eine radial nach innen gerichtete Anlagefläche 88 zum Wechselwirken mit den Spreizelementeringen 81 bzw. 82.

Ferner besitzt der Montagehilfsring 80 noch eine Andrückfläche 89, mittels welcher ein Spreizelementering 81 bzw. 82 gegen die Stufe 86 angedrückt werden kann, wenn zwei oder mehr solcher Montagehilfsringe 80 hintereinander montiert werden bzw. sind.

Die Andrückfläche 89 ist gegenüber der Aufnahmefläche 87 und der Anlagefläche 88 rechtwinkelig angeordnet.

Der besteht aus einem dünnen Material. Dies kann sowohl ein Kunststoff oder auch ein dünnes Blech oder dergleichen sein, dass in diese Ringform geformt wird.

Der Montagehilfsring 80 dient im Wesentlichen zum erleichterten Aufschieben von Spreizelementeringen 81, 82 usw. Ferner fixiert er Spreizelementeringe 81 bzw. 82 in ihrer Lage und macht somit eine weitere Lagefixierung überflüssig.

Der Montagehilfsring 80 verfügt noch über einen Schlitz 90, welcher nahezu an einer beliebigen Stelle des Montagehilfsring 80 angebracht werden kann. Dier Schlitz 90 ermöglicht die Montage auch bei geringen Durchmesservariationen einer Spreizwalze. Ferner hat der Schlitz 90 die Aufgabe, die Vorspannung der elastischen Spreizelementeringe 81, 82, welche sich bei der Montage ergibt, auf die Spreizwalze 1 oder dergleichen zu übertragen. Insofern erübrigen sich dadurch weitere andere Befestigungsmöglichkeiten.

Gemäß der Darstellung nach der Figur 14 ist die Montage der Spreizelementeringe 81 auf dem Montagehilfsring 80 gezeigt, wobei jeweils ein Spreizelementering 81 außen auf einem Montagehilfsring 80 angeordnet ist.

Die weitere Darstellung nach der Figur 15 zeigt die Montage der Spreizelementeringe 82 mit jeweils halber Spreizelementzahl (vgl. Figuren7 bis 12), jeweils zwei Spreizelementering 82 außen auf einem Montagehilfsring 80 angeordnet sind. Gerade in diesem Fall wird die Montage auf der Spreizwalze durch eine unabhängige Vormontage von jeweils zwei solcher Spreizelementeringe 82 auf dem Montagehilfsring 80 erleichtert.

Sind die Montagehilfsringe 80 aus elektrisch leitendem Material hergestellt, können sie vorteilhafterweise auch zum Ableiten elektrostatischer Aufladung verwendet werden.

In den Figuren 16 bis 18 ist noch ein weiteres Ausführungsbeispiel von anderen Spreizelementeringen 95 gezeigt, mittels welchen eine Axialverschiebung eines Umfangsflächenspalts 96 erzielt werden kann.

Insofern sind auch hierdurch alternative Mittel 97 zum Vermeiden eines kritischen Eintauchens eines Materialbahnrandes 30, 31 radial in den Umfangsflächenspalt 96 hinein realisiert, nämlich durch ein Spaltumlenkungselement 98 (nur exemplarisch beziffert) und einer Einbuchtung 99, in welche das Spaltumlenkungselement 98 eingreifen kann.

Damit das Spaltumlenkungselement 98 und die Einbuchtung 99 im Bereich einer Spreizwalzenumfangsfläche 100 wirken kann, sind sowohl das Spaltumlenkungselement 98 als auch die Einbuchtung 99 an einem Kontaktflächenteil 101 des jeweiligen Spreizelementerings 95 angeordnet.

Insofern zeigt das weitere Ausführungsbeispiel aus den Figuren 16 bis 18 beispielhaft eine Möglichkeit, allein durch die Gestaltung des Kontaktflächenteils 101 eines Spreizelementerings eine sich lediglich in einer einzigen Spaltwalzenquerschnittsebene 102 (nur beispielhaft eingezeichnet, siehe Figur 16) zu vermeiden, wenn das Kontaktflächenteil 101 derart ausgebildet ist, dass es in ein benachbartes Kontaktflächenteil 101 eingreifen kann.

Hierzu besitzt jedes Spreizelement 103 eines Spreizelementerings 95 eine Verlängerungsnase 104, welche in etwa u-förmige Einbuchtung 105 hineinragt, wodurch der Umfangsflächenspalt 96 im Sinne vorliegender Erfindung in axialer Richtung 106 umgelenkt ist. Dadurch ist ein möglicher Spalt abgedeckt. Wichtig ist auch hier, dass die Gestaltung so ausgeführt wird, dass genügend Bewegungsmöglichkeit für die Ausführung der Spreizbewegung erhalten bleibt.

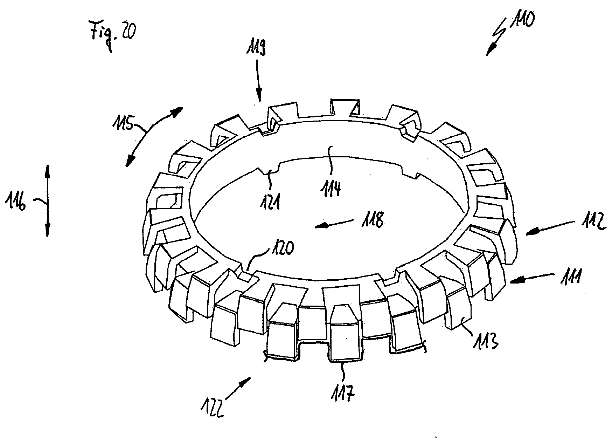

Der in der Figur 20 noch gezeigte Spreizelementering 110 weist ebenfalls zwei Reihen 111 und 112 von Spreizelementen 113 auf, wobei die Reihen 111, 112 axial hintereinander an einem gemeinsamen Tragringteil 114 des Spreizelementerings 110 angeordnet sind und sich mit ihren Spreizelementen 113 in Umfangsrichtung 115 des Spreizelementerings 110 erstrecken.

Die Spreizelemente 113 der zwei Reihen 111 und 112 springen hierbei im Verlauf der Umfangsrichtung 115 alternierend in axialer Richtung 116, so dass sich an einer Spreizwalze 1 ein mäandrierender Umfangsflächenspalt 117 (hier nur exemplarisch als Abschnittslinie gezeigt) ergibt, wenn mehrere solcher Spreizelementeringe 110 axial hintereinander an der Spreizwalz 1 montiert sind.

Damit die einzelnen Spreizelementeringe 110 in der richtigen Ausrichtung zueinander und damit betriebssicher montiert werden können, umfasst der Spreizelementering 110 eine Positionier- und Montagehilfe 118, welche sich in diesem Ausführungsbeispiel durch eine Feder-Nutverbindung 119 mit Nutelementen 120 und Federelementen 121 an dem Tragringteil 114 auszeichnet. Feder-Nutverbindungen 119 sind an sich bekannt, so dass das Wirkungsprinzip vorliegend nicht weiter erläutert wird. Nur so viel noch, dass Positionier- und Montagehilfe 118 im montierten Zustand von etlichen axial hintereinander angeordneten Spreizelementeringen 110 sogleich auch eine Verdrehsicherung bildet, welche verhindert, dass einzelne Spreizelementeringe 110 sich an der Spreizwalze 1 unbeabsichtigt um die Rotationsachse 6 verdrehen.

Auch durch diese alternierende Anordnung der einzelnen Spreizelemente 113 in zwei Reihen 111, 112 können anders ausgestaltete Mittel 122 zum Vermeiden eines kritischen Eintauchens eines Materialbahnrandes 30, 31 radial in den Umfangsflächenspalt 117 hinein in die Realität umgesetzt sein.

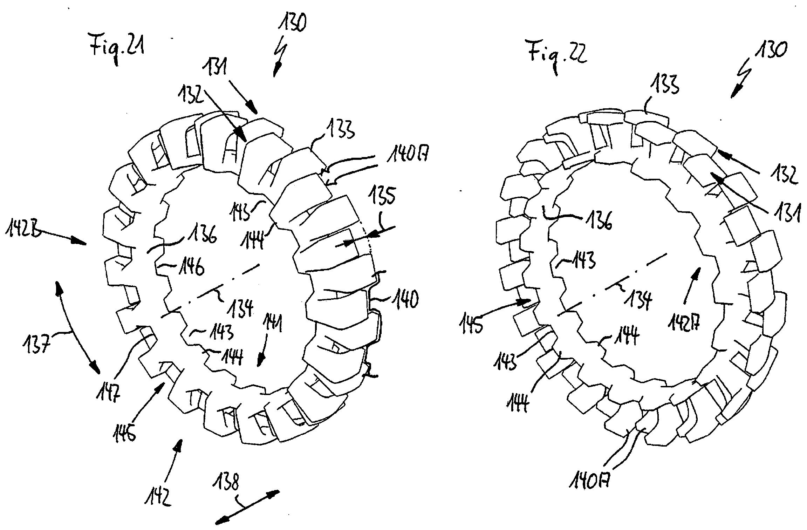

Der in den Figuren 21 und 22 gezeigte zusätzliche Spreizelementering 130 zeichnet sich ebenfalls wieder durch zwei Reihen 131 und 132 von Spreizelementen 133 auf, wobei die Reihen 131 und 132 bezogen auf die Mittelachse 134 des weiterentwickelten Spreizelementerings 130 wieder mit einem Axialversatz 135 (vgl. insbesondere auch Figur 20) axial hintereinander an einem gemeinsamen Tragringteil 136 des weiterentwickelten Spreizelementerings 130 angeordnet sind.

Die Spreizelemente 133 der zwei axial hintereinander angeordneten Reihen 131 und 132 springen hierbei im Verlauf der Umfangsrichtung 137 (nur an Figur 21 beziffert) alternierend in axialer Richtung 138 (vgl. auch Figur 20, aber nur an Figur 21 beziffert), so dass sich an einer Spreizwalze 1 (siehe beispielhaft Figur 1) ein mäandrierender Umfangsflächenspalt 140 (hier wieder nur exemplarisch als Abschnittslinie gezeigt) ergibt, wodurch auch hier wieder ein quer zur Umfangsrichtung 137 verlaufender veränderlicher Axialhöhenverlauf 36 (siehe Beispielhaft Figur 2) realisiert werden kann.

Insofern ist der hier gezeigte Umfangsflächenspalt 140 auch in diesem Ausführungsbeispiel durch Seitenbegrenzungsabschnitte 140A (nur exemplarisch beziffert) formuliert, wobei diese flexiblen Seitenbegrenzungsabschnitte 140A zumindest teilweise durch die einzelnen Spreizelemente 133 ausgestaltet sind, wie dies ebenfalls bei den vorstehend beschriebenen Ausführungsbeispielen der Fall ist, wenn auch dort nicht explizit ausgewiesen bzw. beschrieben ist.

Um einzelne Spreizelementeringe 130 in der richtigen Ausrichtung zueinander und damit betriebssicher zu einer Spreizwalze 1 montieren zu können, ist an dem Spreizelementering 130 ebenfalls eine Positionier- und Montagehilfe 141 vorgesehen.

In diesem Ausführungsbeispiel umfasst die Positionier- und Montagehilfe 141 Vielzahnprofile 142, welche beidseits an dem Tragringteil 136 eine Vielzahl an Nutelementen 143 und Zahnelementen 144 aufweisen, nämlich ein erstes Vielzahnprofils 142A und ein zweites Vielzahnprofil 142B.

Die Nut- und Federelemente 143 und 144 sind hierbei derart konzipiert, dass jedes Zahnelement 144 formschlüssig in jedes Nutelement 143 passt, so dass hinsichtlich zwei hintereinander angeordneter Spreizelementeringe 130 eine sehr enge Verdrehrasterung um die Mittelachse 134 herum geschaffen ist. Hierdurch ist sogleich auch eine Verdrehsicherung gebildet, welche verhindert, dass sich einzelne an einer Spreizwalze 1 montierte Spreizelementeringe 130 an dieser Spreizwalze 1 unbeabsichtigt um die Mittelachse 134 bzw. Rotationsachse 6 verdrehen.

Auch durch diese alternierende Anordnung der einzelnen Spreizelemente 133 in zwei Reihen 131, 132 verkörpern Mittel 145 zum Vermeiden eines kritischen Eintauchens eines Materialbahnrandes 30, 31 (siehe Figur 1) radial in den Umfangsflächenspalt 140 hinein.

Ein weiterer großer Vorteil bei der Ausführungsvariante mit den Vielzahnprofilen 142 ist, dass einzelne Spreizelementeringe 130 miteinander oder gegeneinander moniert werden können, wobei eine Montagerichtung "miteinander" nach wie vor eine spreizende Wirkung auf eine flächige Materialbahn 2 besitzt, währen einer Montagerichtung "gegeneinander" eine spreizneutrale Wirkung auf eine flächige Materialbahn 2 hat.

Bei einer Montagerichtung "miteinander" zeigen die einzelnen Spreizelemente 133 in die gleiche axiale Spreizrichtung 3 oder 4 (siehe Figur 1), sind also gleich gerichtet montiert.

Bei einer Montagerichtung "gegeneinander" zeigen die einzelnen Spreizelemente 133 hingegen in die entgegengesetzte axiale Spreizrichtung 3 oder 4 (siehe Figur 1), sind also entgegengesetzt gerichtet montiert.

Hierbei sind die Spreizelemente 133 der zweiten Reihe 132 an Zahnelementen 144 des Vielzahnprofils 142 bzw. der Nut-Feder-Verbindung angeordnet, wie dies beispielweise auch aus der Darstellung nach der Figur 20 zu sehen ist, wobei bei dem Ausführungsbeispiel nach der Figur 20 mehr als ein Spreizelement 113 an einem Federelement 121 angeordnet ist.

Jedenfalls sind bei dem Ausführungsbeispiel der Figuren 21 und 22 die Spreizelemente 133 der ersten Reihe 131 axial vor den einzelnen Nutelementen 143 platziert.

Genauer gesagt sind die Spreizelemente 133 axial vor den Nutelementen 143 angeordnet, welche sich zwischen den Federelementen 144 befinden, an welchen wiederum die Spreizelemente 133 der zweiten Reihe 132 angeordnet sind.

Der Spreizelementering 130 besitzt somit zwei Vielzahlprofile 142, welche zueinander komplementär ausgestaltet sind.

Hierbei sind an den Zahnelementen 144 des zweiten Vielzahnprofils 142B jeweils ein Spreizelement 133, im Gegensatz beispielsweise zu dem in der Figur 20 gezeigten Spreizringelement 110, bei welchem an dem dortigen Federelement 121 mehrere Spreizelemente 113 appliziert sind.

Die Vielzahnprofile 142 sind hierbei an dem jeweiligen Rand 146 bzw. 147 des Tragringteils 136 vorgesehen.

Die Erfindung wird in den Ansprüchen offenbart.

### Liste der verwendeten Bezugszeichen

- 1: Spreizwalze
- 2: flächige Materialbahn
- 3: linke axiale Spreizrichtung
- 4: rechte axiale Spreizrichtung
- 5: Längserstreckung
- 6: Rotationsachse
- 7: Rotationskörper
- 8: Achsenteil bzw. Welle
- 9: erstes Kugellager
- 10: zweites Kugellager
- 11: Transportrichtung
- 15: Spreizelementeringe
- 16: Mittenebene
- 20: Spreizelemente
- 21: Umfangsfläche
- 22: Umfangsrichtung
- 24: Tragringteil
- 25: Kontaktflächenteile
- 26: Stegteile
- 27: Umfangsflächenspalt
- 28: erstes Ende
- 29: zweites Ende
- 30: linker Materialbahnrand
- 31: rechter Materialbahnrand
- 33: veränderliche Axialhöhen
- 35: Abwicklung
- 36: veränderlicher Axialhöhenverlauf
- 37: herkömmlicher Spalt
- 38: Restspaltabschnitt
- 40: erste Mittel zum Vermeiden eines kritischen Eintauchens
- 42: schräg montierte Spreizelementeringe
- 43: Spaltwalzenquerschnittsebene
- 44: Breite
- 45: weitere Mittel zum Vermeiden eines kritischen Eintauchens
- 46: Spalt
- 50: alternativer Spreizelementering
- 51: halbe Spreizelementbreite
- 52: Spaltlängenabschnitt
- 53: Innendurchmesser
- 54: Außendurchmesser
- 55: Spreizelementering
- 56: Maß
- 58: Abstand bzw. Lücke
- 59: Axialversatz
- 60: erste Spaltwalzenquerschnittsebene
- 61: planparallele Spaltwalzenquerschnittsebene
- 65: erster Spreizelementering
- 66: zweiter Spreizelementering
- 67: Verdrehwinkel
- 68: erste Spreizelemente
- 69: Lücken
- 70: zweite Spreizelemente
- 71: unstetig verlaufender Umfangsflächenspalt
- 72: Umfangsflächenspaltteilabschnitten
- 73: Abwicklung
- 74: erstes Tragringteil
- 75: zweites Tragringteil
- 76: halbe Breite
- 77: halbe Breite
- 80: Montagehilfsring
- 81: Spreizelementeringe
- 82: Spreizelementeringe
- 83: Aufnahmekörper
- 84: Durchmesser
- 85: Durchmesser
- 86: Stufe
- 87: Aufnahmefläche
- 88: Anlagefläche
- 89: Andrückfläche
- 90: Schlitz
- 95: Spreizelementeringe
- 96: Umfangsflächenspalt
- 97: alternative Mittel zum Vermeiden eines kritischen Eintauchens
- 98: Spaltumlenkungselement
- 99: Einbuchtung
- 100: Spreizwalzenumfangsfläche
- 101: Kontaktflächenteil
- 102: Spaltwalzenquerschnittsebene
- 103: Spreizelement
- 104: Verlängerungsnase
- 105: Einbuchtung
- 106: axiale Richtung
- 110: Spreizelementering
- 111: erste Reihe
- 112: zweite Reihe
- 113: Spreizelemente
- 114: Tragringteil
- 115: Umfangsrichtung
- 116: axiale Richtung
- 117: mäandrierender Umfangsflächenspalt
- 118: Positionier- und Montagehilfe
- 119: Feder-Nutverbindung
- 120: Nutelemente bzw. Nuten
- 121: Federelemente
- 122: Mittel zum Vermeiden eines kritischen Eintauchens
- 130: Spreizelementering
- 131: erste Reihe
- 132: zweite Reihe
- 133: Spreizelemente
- 134: Mittelachse bzw. Rotationsachse
- 135: Axialversatz
- 136: Tragringteil
- 137: Umfangsrichtung
- 138: axiale Richtung bzw. axial
- 140: mäandrierender Umfangsflächenspalt
- 141: alternative Positionier- und Montagehilfe
- 142: Vielzahnprofile
- 142A: erstes Vielzahnprofil
- 142B: zweites Vielzahnprofil
- 143: Nutelemente bzw. Nuten
- 144: Zahnelemente
- 145: Mittel zum Vermeiden eines kritischen Eintauchens
- 146: erster Rand
- 147: zweiter Rand

- λ: Anstellwinkel

## Patentansprüche

1. Spreizelementering (15; 42; 50, 55; 65, 66; 81, 82; 95; 110; 130) aus elastisch verformbarem Material für eine Spreizwalze (1) zum seitlichen Ausbreiten einer flächigen Materialbahn (2) in axiale Spreizrichtungen (3, 4) mit einer Vielzahl an Spreizelementen (20; 68, 70; 103; 113; 133), bei welchem die Vielzahl an Spreizelementen (20; 68, 70; 103; 113; 133) in Umfangsrichtung (22; 115; 137) des Spreizelementerings (15; 42; 50, 55; 65, 66; 81, 82; 95; 110; 130) hintereinander angeordnet sind, ***dadurch gekennzeichnet, dass*** Spreizelemente (20; 68, 70; 103; 113; 133) quer zur Umfangsrichtung (22; 115; 137) und damit axial versetzt zueinander an dem Spreizelementering (15; 42; 50, 55; 65, 66; 81, 82; 95; 110; 130) angeordnet sind.

2. Spreizelementering (15; 42; 50, 55; 65, 66; 81, 82; 95; 110; 130) nach Anspruch *1, **dadurch gekennzeichnet, dass*** Spreizelemente (20; 68, 70; 103; 113; 133) in Umfangsrichtung (22; 115; 137) mit einem Abstand (58) voneinander beanstandet nebeneinander angeordnet sind, der mindestens die Breite eines Spreizelements (20; 68, 70; 103; 113; 133) in Umfangsrichtung (22; 115; 137) beträgt, wobei dieser Abstand (58) eine Lücke bedingt, in welcher ein Spreizelement (20; 68, 70; 103; 113; 133), vorzugsweise zwei Spreizelemente (20; 68, 70; 103; 113; 133), nur teilweise angeordnet sind.

3. Spreizelementering (15; 42; 50, 55; 65, 66; 81, 82; 95; 110; 130) nach Anspruch 1 oder 2, ***dadurch gekennzeichnet, dass*** zwischen zwei in Umfangsrichtung (22; 115; 137) mit einem Abstand (58) voneinander beabstandeten Spreizelementen (20; 68, 70; 103; 113; 133) ein hierzu axial verschobenes Spreizelement (20; 68, 70; 103; 113; 133) angeordnet ist. (A8)

4. Spreizelementering (15; 42; 50, 55; 65, 66; 81, 82; 95; 110; 130) nach einem der Ansprüche 1 bis 3, ***dadurch gekennzeichnet, dass*** die einzelnen Spreizelemente (20; 68, 70; 103; 113; 133) des Spreizelementerings (15; 42; 50, 55; 65, 66; 81, 82; 95; 110; 130) derart zueinander angeordnet sind, dass die einzelnen Spreizelemente (20; 68, 70; 103; 113; 133) einen in Umfangsrichtung (22; 115; 137) verlaufenden Umfangsflächenspalt (27; 71; 96; 117; 140) ausgestalten.

5. Spreizelementering (15; 42; 50, 55; 65, 66; 81, 82; 95; 110; 130) nach Anspruch *4, **dadurch gekennzeichnet, dass*** der Umfangsflächenspalt (27; 71; 96; 117; 140) dadurch erzeugt ist, dass einzelne Spreizelemente (20; 68, 70; 103; 113; 133) aus einer Vielzahl an in Umfangsrichtung (22; 115; 137) nebeneinander angeordneten Spreizelementen (20; 68, 70; 103; 113; 133) axial ausgerückt sind.

6. Spreizelementering (15; 42; 50, 55; 65, 66; 81, 82; 95; 110; 130) nach Anspruch 4 oder 5, ***dadurch gekennzeichnet, dass*** der Umfangsflächenspalt (27; 71; 96; 117; 140) in axialer Richtung (138) axial flexibel veränderbar ausgebildet ist.

7. Spreizelementering (15; 42; 50, 55; 65, 66; 81, 82; 95; 110; 130) nach einem der Ansprüche 4 bis 6, ***dadurch gekennzeichnet, dass*** der Umfangsflächenspalt (27; 71; 96; 117; 140) flexible Seitenbegrenzungsabschnitte (140A) aufweist, wobei diese flexiblen Seitenbegrenzungsabschnitte (140A) durch die einzelnen Spreizelemente (20; 68, 70; 103; 113; 133) ausgestaltet sind.

8. Spreizelementering (15; 42; 50, 55; 65, 66; 81, 82; 95; 110; 130) nach einem der Ansprüche 4 bis 7, ***dadurch gekennzeichnet, dass*** der Umfangsflächenspalt (27; 71; 96; 117; 140) quer zur Umfangsrichtung (22; 115; 137) wenigstens eine Kurve, insbesondere eine Sinuskurve, ausgestaltet.

9. Spreizelementering (15; 42; 50, 55; 65, 66; 81, 82; 95; 110; 130) nach einem der Ansprüche 4 bis 8, ***dadurch gekennzeichnet, dass*** der Umfangsflächenspalt (27; 71; 96; 117; 140) in Umfangsrichtung (22; 115; 137) mäandrierend ausgebildet ist.

10. Spreizelementering (15; 42; 50, 55; 65, 66; 81, 82; 95; 110; 130) nach einem der Ansprüche 1 bis 9, ***dadurch gekennzeichnet, dass*** unmittelbar benachbarte Spreizelementeringe (15; 42; 50, 55; 65, 66; 81, 82; 95; 110; 130) mittels einer Feder-Nutverbindung (119) wirkverbunden sind.

11. Spreizelementering (15; 42; 50, 55; 65, 66; 81, 82; 95; 110; 130) nach Anspruch 10, ***dadurch gekennzeichnet, dass*** Spreizelemente (20; 68, 70; 103; 113; 133) an einem Federelement (121) der Feder-Nutverbindung (119) angeordnet sind.

12. Spreizelementering (15; 42; 50, 55; 65, 66; 81, 82; 95; 110; 130) nach Anspruch 10 oder 11, ***dadurch gekennzeichnet, dass*** einem ein Spreizelement (20; 68, 70; 103; 113; 130) aufweisenden Federelement (121) ein Nutelement (120) axial gegenüberliegend angeordnet ist.

13. Spreizelementering (15; 42; 50, 55; 65, 66; 81, 82; 95; 110; 130) nach einem der Ansprüche 1 bis 12, ***dadurch gekennzeichnet, dass*** der Spreizelementering (15; 42; 50, 55; 65, 66; 81, 82; 95; 110; 130) wenigstens ein Vielzahnprofil (142, 142A, 142B) umfasst, welches an einem Rand (146, 147) eines Tragringteils (24; 74, 75; 114; 136) des Spreizelementerings (15; 42; 50, 55; 65, 66; 81, 82; 95; 110; 130) angeordnet ist.

14. Spreizelementering (15; 42; 50, 55; 65, 66; 81, 82; 95; 110; 130) nach einem der Ansprüche 1 bis 13, ***dadurch gekennzeichnet, dass*** ein Spreizelement (20; 68, 70; 103; 113; 133) des Spreizelementerings (15; 42; 50, 55; 65, 66; 81, 82; 95; 110; 130) an einem Zahnelement (144) eines an dem Spreizelementering (15; 42; 50, 55; 65, 66; 81, 82; 95; 110; 130) ausgebildeten Vielzahnprofils (142, 142A, 142B) angeordnet ist.

15. Spreizwalze (1) zum seitlichen Ausbreiten einer flächigen Materialbahn (2) in axiale Spreizrichtungen (3, 4) mit einer Vielzahl an einzelne Spreizelemente (20; 68, 70; 103; 113; 133) umfassende Spreizelementeringen (15; 42; 50, 55; 65, 66; 81, 82; 95; 110; 130), welche eine Umfangsfläche (21; 100) bilden, bei welcher zwischen einzelnen Spreizelementen (20; 68, 70; 103; 113; 133) an der Umfangsfläche (21; 100) ein Umfangsflächenspalt (27; 71; 96; 117; 140) gebildet ist, welcher sich in Umfangsrichtung (22; 115; 137) der Spreizwalze (1) herum erstreckt, ***gekennzeichnet durch*** Spreizelementeringe (15; 42; 50, 55; 65, 66; 81, 82; 95; 110; 130) nach einem der vorhergehenden Ansprüche.

## Claims

1. Spreading element ring (15; 42; 50; 55; 65; 66; 81; 82; 95; 110; 130) made of elastically deformable material for a spreading roller (1) for laterally spreading a planar material sheet (2) in axial spreading directions (3, 4) by means of a plurality of spreading elements (20; 68, 70; 103; 113; 133), where the plurality of spreading elements (20; 68, 70; 103; 113; 133) are arranged in series in the circumferential direction (22; 115; 137) of the spreading element ring (15; 42; 50, 55; 65, 66; 81, 82; 95; 110; 130); ***characterized* in that** spreading elements (20; 68, 70; 103; 113; 133) are arranged transversely to the circumferential direction (22; 115; 137) and thus axially displaced with respect to one another on the spreading element ring (15; 42; 50, 55; 65, 66; 81, 82; 95; 110; 130) .

2. Spreading element ring (15; 42; 50, 55; 65, 66; 81, 82; 95; 110; 130) according to Claim 1, ***characterized* in that** spreading elements (20; 68, 70; 103; 113; 133) are arranged next to each other in the circumferential direction (22; 115; 137), mutually spaced with a spacing (58) which has at least the width of a spreading element (20; 68, 70; 103; 113; 133) in the circumferential direction (22; 115; 137), with this spacing (58) defining a gap in which a spreading element (20; 68, 70; 103; 113; 133), preferably two spreading elements (20; 68, 70; 103; 113; 133), are only partly arranged.

3. Spreading element ring (15; 42; 50, 55; 65, 66; 81, 82; 95; 110; 130) according to Claim 1 or 2, ***characterized in* that** between two spreading elements (20; 68, 70; 103; 113; 133) mutually spaced in the circumferential direction (22; 115; 137) with a spacing (58), a spreading element (20; 68, 70; 103; 113; 133) axially displaced with respect thereto is arranged. (A8)

4. Spreading element ring (15; 42; 50, 55; 65, 66; 81, 82; 95; 110; 130) according to one of Claims 1 through 3, ***characterized in* that** the individual spreading elements (20; 68, 70; 103; 113; 133) of the spreading element ring (15; 42; 50, 55; 65, 66; 81, 82; 95; 110; 130) are arranged with respect to each other such that the individual spreading elements (20; 68, 70; 103; 113; 133) define a circumferential area gap (27; 71; 96; 117; 140) extending in the circumferential direction (22; 115; 137).

5. Spreading element ring (15; 42; 50, 55; 65, 66; 81, 82; 95; 110; 130) according to Claim 4, ***characterized* in that** the circumferential area gap (27; 71; 96; 117; 140) is created by axially moving outward individual spreading elements (20; 68, 70; 103; 113; 133) of a plurality of spreading elements (20; 68, 70; 103; 113; 133) arranged next to each other in the circumferential direction (22; 115; 137).

6. Spreading element ring (15; 42; 50, 55; 65, 66; 81, 82; 95; 110; 130) according to Claim 4 or 5, **characterized in that** the circumferential area gap (27; 71; 96; 117; 140) is embodied so as to be axially flexibly modifiable in the axial direction (138).

7. Spreading element ring (15; 42; 50, 55; 65, 66; 81, 82; 95; 110; 130) according to one of Claims 4 through 6, ***characterized in* that** the circumferential area gap (27; 71; 96; 117; 140) has flexible side limiting portions (140A), these flexible side limiting portions (140A) being embodied by the individual spreading elements (20; 68, 70; 103; 113; 133).

8. Spreading element ring (15; 42; 50, 55; 65, 66; 81, 82; 95; 110; 130) according to one of Claims 4 through 7, ***characterized* in that** the circumferential area gap (27; 71; 96; 117; 140) forms at least one curve, in particular a sinusoid, transversely to the circumferential direction (22; 115; 137).

9. Spreading element ring (15; 42; 50, 55; 65, 66; 81, 82; 95; 110; 130) according to one of Claims 4 through 8, ***characterized in* that** the circumferential area gap (27; 71; 96; 117; 140) is embodied so as to meander in the circumferential direction (22; 115; 137).

10. Spreading element ring (15; 42; 50, 55; 65, 66; 81, 82; 95; 110; 130) according to one of Claims 1 through 9, ***characterized in* that** directly adjacent spreading element rings (15; 42; 50, 55; 65, 66; 81, 82; 95; 110; 130) are operatively connected by a feather-and-groove joint (119).

11. Spreading element ring (15; 42; 50, 55; 65, 66; 81, 82; 95; 110; 130) according to Claim 10, ***characterized* in that** spreading elements (20; 68, 70; 103; 113; 133) are arranged on a feather element (121) of the feather-and-groove joint (119).

12. Spreading element ring (15; 42; 50, 55; 65, 66; 81, 82; 95; 110; 130) according to Claim 10 or 11, **characterized in that** a groove element (120) is arranged axially opposite a feather element (121) having a spreading element (20; 68, 70; 103; 113; 130).

13. Spreading element ring (15; 42; 50, 55; 65, 66; 81, 82; 95; 110; 130) according to one of Claims 1 through 12, ***characterized* in that** the spreading element ring (15; 42; 50, 55; 65, 66; 81, 82; 95; 110; 130) comprises at least one multitooth profile (142, 142A, 142B) arranged on a rim (146, 147) of a supporting ring part (24; 74, 75; 114; 136) of the spreading element ring (15; 42; 50, 55; 65, 66; 81, 82; 95; 110; 130).

14. Spreading element ring (15; 42; 50, 55; 65, 66; 81, 82; 95; 110; 130) according to one of Claims 1 through 13, ***characterized in that*** a spreading element (20; 68, 70; 103; 113; 133) of the spreading element ring (15; 42; 50, 55; 65, 66; 81, 82; 95; 110; 130) is arranged on a tooth element (144) of the multitooth profile (142, 142A, 142B) formed on the spreading element ring (15; 42; 50, 55; 65, 66; 81, 82; 95; 110; 130). t

15. Spreading roller (1) for laterally spreading a planar material sheet (2) in axial spreading directions (3, 4), having a plurality of spreading element rings (15; 42; 50, 55; 65, 66; 81, 82; 95; 110; 130) which comprise a plurality of individual spreading elements (20; 68, 70; 103; 113; 133) and form a circumferential area (21; 100), wherein a circumferential area gap (27; 71; 96; 117; 140) is formed between individual spreading elements (20; 68, 70; 103; 113; 133) in the circumferential area (21; 100), which gap extends around the spreading roller (1) in the circumferential direction (22; 115; 137), ***characterized by*** spreading element rings (15; 42; 50, 55; 65, 66; 81, 82; 95; 110, 130) according to one of the above Claims.

## Revendications

1. Bague à éléments d'écartement (15, 42, 50, 55, 65, 66, 81, 82, 95, 110, 130) en matériau élastiquement déformable pour un rouleau d'écartement (1) pour l'écartement latéral d'une bande de matériau plane (2) dans des directions d'écartement axiales (3, 4) avec une pluralité d'éléments d'écartement (20, 68, 70, 103, 113, 133), pour laquelle les éléments d'écartement (20, 68, 70, 103, 113, 133) en pluralité sont disposés les uns derrière les autres en direction périphérique (22, 115, 137) de la bague à éléments d'écartement (15, 42, 50, 55, 65, 66, 81, 82, 95, 110, 130) **caractérisée en ce que** des éléments d'écartement (20, 68, 70, 103, 113, 133) sont disposés transversalement à la direction périphérique (22, 115, 137) et de ce fait axialement décalés les uns par rapport aux autres sur la bague à éléments d'écartement (15, 42, 50, 55, 65, 66, 81, 82, 95, 110, 130).

2. Bague à éléments d'écartement (15, 42, 50, 55, 65, 66, 81, 82, 95, 110, 130) selon la revendication 1, **caractérisée en ce que** les éléments d'écartement (20, 68, 70, 103, 113, 133) sont disposés les uns à côté des autres espacés les uns des autres en direction périphérique (22, 115, 137) à une distance (58) qui représente au moins la largeur d'un élément d'écartement (20, 68, 70, 103, 113, 133) en direction périphérique (22, 115, 137), sachant que cette distance (58) conditionne un vide dans lequel est disposé seulement en partie un élément d'écartement (20, 68, 70, 103, 113, 133), sont disposés de préférence deux éléments d'écartement (20, 68, 70, 103, 113, 133).

3. Bague à éléments d'écartement (15, 42, 50, 55, 65, 66, 81, 82, 95, 110, 130) selon la revendication 1 ou 2, **caractérisée en ce qu'**un élément d'écartement (20, 68, 70, 103, 113, 133) axialement déporté à cet effet est disposé (A8) entre deux éléments d'écartement (20, 68, 70, 103, 113, 133) espacés l'un de l'autre d'une distance (58) en direction périphérique (22, 115, 137).

4. Bague à éléments d'écartement (15, 42, 50, 55, 65, 66, 81, 82, 95, 110, 130) selon l'une quelconque des revendications 1 à 3, **caractérisée en ce que** les éléments d'écartement (20, 68, 70, 103, 113, 133) individuels de la bague à éléments d'écartement (15, 42, 50, 55, 65, 66, 81, 82, 95, 110, 130) sont disposés l'un par rapport à l'autre de telle manière que les éléments d'écartement (20, 68, 70, 103, 113, 133) individuels constituent un espace de surface périphérique (27, 71, 96, 117, 140) passant en direction périphérique (22, 115, 137)..

5. Bague à éléments d'écartement (15, 42, 50, 55, 65, 66, 81, 82, 95, 110, 130) selon la revendication 4, **caractérisée en ce que** l'espace de surface périphérique (27, 71, 96, 117, 140) est généré par le fait que les éléments d'écartement (20, 68, 70, 103, 113, 133) individuels sont axialement désenclenchés à partir d'une pluralité d'éléments d'écartement (20, 68, 70, 103, 113, 133) disposés les uns près des autres dans la direction périphérique (22, 115, 137).

6. Bague à éléments d'écartement (15, 42, 50, 55, 65, 66, 81, 82, 95, 110, 130) selon la revendication 4 ou 5, **caractérisée en ce que** l'espace de surface périphérique (27, 71, 96, 117, 140) est constitué modifiable axialement de façon flexible en direction axiale (138).

7. Bague à éléments d'écartement (15, 42, 50, 55, 65, 66, 81, 82, 95, 110, 130) selon l'une quelconque des revendications 4 à 6, **caractérisée en ce que** l'espace de surface périphérique (27, 71, 96, 117, 140) comporte des sections de délimitation latérales flexibles (140A), sachant que ces sections de délimitation latérales flexibles (140A) sont constituées par des éléments d'écartement (20, 68, 70, 103, 113, 133) individuels.

8. Bague à éléments d'écartement (15, 42, 50, 55, 65, 66, 81, 82, 95, 110, 130) selon l'une quelconque des revendications 4 à 7, **caractérisée en ce que** l'espace de surface périphérique (27, 71, 96, 117, 140) présente transversalement à la direction périphérique (22, 115, 137) au moins une courbe, en particulier une courbe sinusoïdale.

9. Bague à éléments d'écartement (15, 42, 50, 55, 65, 66, 81, 82, 95, 110, 130) selon l'une quelconque des revendications 4 à 8, **caractérisée en ce que** l'espace de surface périphérique (27, 71, 96, 117, 140) est constitué en forme de méandres dans la direction périphérique (22, 115, 137).

10. Bague à éléments d'écartement (15, 42, 50, 55, 65, 66, 81, 82, 95, 110, 130) selon l'une quelconque des revendications 1 à 9, **caractérisée en ce que** les bagues à éléments d'écartement (15, 42, 50, 55, 65, 66, 81, 82, 95, 110, 130) directement voisines sont reliées de façon fonctionnelle au moyen d'un assemblage à rainure et languette (119).

11. Bague à éléments d'écartement (15, 42, 50, 55, 65, 66, 81, 82, 95, 110, 130) selon la revendication 10, **caractérisée en ce que** des éléments d'écartement (20, 68, 70, 103, 113, 133) sont disposés sur un élément faisant ressort (121) de l'assemblage à rainure et languette (119).

12. Bague à éléments d'écartement (15, 42, 50, 55, 65, 66, 81, 82, 95, 110, 130) selon la revendication 10 ou 11, **caractérisée en ce qu'**un élément à rainure (120) est disposé axialement opposé à un élément faisant ressort (121) comportant un élément d'écartement (20, 68, 70, 103, 113, 133).

13. Bague à éléments d'écartement (15, 42, 50, 55, 65, 66, 81, 82, 95, 110, 130) selon l'une quelconque des revendications 1 à 12, **caractérisée en ce que** la bague à éléments d'écartement (15, 42, 50, 55, 65, 66, 81, 82, 95, 110, 130) comprend au moins un profil à denture multiple (142, 142A, 142B), lequel est disposé sur un bord (146, 147) d'une partie annulaire de support (24, 74, 75, 114, 136) de la bague à éléments d'écartement (15, 42, 50, 55, 65, 66, 81, 82, 95, 110, 130).

14. Bague à éléments d'écartement (15, 42, 50, 55, 65, 66, 81, 82, 95, 110, 130) selon l'une quelconque des revendications 1 à 13, **caractérisée en ce qu'un** élément d'écartement (20, 68, 70, 103, 113, 133) de la bague à éléments d'écartement (15, 42, 50, 55, 65, 66, 81, 82, 95, 110, 130) est disposé sur un élément denté (144) d'un profil à denture multiple (142, 142A, 142B) constitué sur la bague à éléments d'écartement (15, 42, 50, 55, 65, 66, 81, 82, 95, 110, 130).

15. Rouleau d'écartement (1) pour l'écartement latéral d'une bande de matériau plane (2) dans des directions d'écartement axiales (3, 4) avec une pluralité de bagues à éléments d'écartement (15, 42, 50, 55, 65, 66, 81, 82, 95, 110, 130) comprenant des éléments d'écartement (20, 68, 70, 103, 113, 133) individuels, lesquels forment une surface périphérique (21, 100) pour laquelle un espace de surface périphérique (27, 71, 96, 117, 140) est formé entre les éléments d'écartement (20, 68, 70, 103, 113, 133) individuels sur la surface périphérique (21, 100), lequel s'étend en direction périphérique (22, 115, 137) autour du rouleau d'écartement (1), **caractérisé par** des bagues à éléments d'écartement (15, 42, 50, 55, 65, 66, 81, 82, 95, 110, 130) selon l'une quelconque des revendications précédentes.
